(19) Europäisches Patentamt / European Patent Office / Office européen des brevets

(11) **EP 4 694 064 A1**

(12) **EUROPEAN PATENT APPLICATION**
published in accordance with Art. 153(4) EPC

(43) Date of publication:
**11.02.2026 Bulletin 2026/07**

(21) Application number: **23938731.9**

(22) Date of filing: **26.05.2023**

(51) International Patent Classification (IPC):
**H04L 41/16** (2022.01)  **G06N 20/20** (2019.01)

(52) Cooperative Patent Classification (CPC):
**G06N 20/20; H04L 41/16**

(86) International application number:
**PCT/CN2023/096598**

(87) International publication number:
**WO 2024/243732 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Huawei Technologies Co., Ltd.**
**Shenzhen, Guangdong 518129 (CN)**

(72) Inventors:
• XU, Chen
  Shenzhen, Guangdong 518129 (CN)
• ZHANG, Gongzheng
  Shenzhen, Guangdong 518129 (CN)
• WANG, Jian
  Shenzhen, Guangdong 518129 (CN)
• LI, Rong
  Shenzhen, Guangdong 518129 (CN)

(74) Representative: **Gill Jennings & Every LLP**
**The Broadgate Tower**
**20 Primrose Street**
**London EC2A 2ES (GB)**

(54) **MODEL TRAINING CONFIGURATION METHOD AND RELATED DEVICE**

(57)   This application provides a model training configuration method and a related apparatus, so that an artificial intelligence AI task node configures at least one first additional module for a first AI training node, and the first AI training node performs transmission of data, a parameter, and/or the like with a second AI training node via the at least one first additional module. The AI task node sends a first request to the first AI training node, where the first request is for requesting the first AI training node to train a first submodel. The AI task node sends first configuration information to the first AI training node, where the first configuration information is for configuring the at least one first additional module; and the at least one first additional module is configured to map a symbol output by the first submodel to a symbol to be output by the first AI training node on an air interface, and/or the at least one first additional module is configured to convert a symbol received by the first AI training node on an air interface into an update parameter for updating the first submodel.

[FIG. 3B]

**(Cont. next page)**

[FIG. 3A]

| AI model node | AI task node | First AI training node | Second AI training node |

301a: Fourth request
(for requesting to train a first model)

301: First request
(for requesting the first AI training node to train a first submodel)

301b: Third request
(for requesting the second AI training node to train a second submodel)

301c: Second request
(for requesting channel state information between the first AI training node and the second AI training node)

301d: Channel measurement signal

301e: Channel state information

301f: Channel state information

302: First configuration information
(for configuring at least one first additional module)

TO FIG. 3B          TO FIG. 3B

**Description**

**TECHNICAL FIELD**

This application relates to the field of communication technologies, and in particular, to a model training configuration method and a related apparatus.

**BACKGROUND**

An increasingly mature (artificial intelligence, AI) technology will play an important role in promoting evolution of future mobile communication network technologies. Currently, the AI technology has been applied to a network layer (for example, network optimization, mobility management, and resource allocation), a physical layer (for example, channel encoding and decoding, channel prediction, and a receiver), and other aspects.

The AI technology is applied to a communication device. For example, a first communication device and a second communication device are two AI training nodes. A channel between the first communication device and the second communication device is unknown. The first communication device may map data or a parameter to an air interface resource for transmission, that is, convert the data or the parameter into a signal to be sent on an air interface, and send the to-be-sent signal to the second communication device, to implement joint training between the first communication device and the second communication device. The first communication device and the second communication device do not need to perform, to generate a signal for sending, channel coding and symbol modulation by using the physical layer.

It can be learned that how the first communication device maps the data or the parameter to the air interface resource for transmission, that is, how the first communication device converts the data or the parameter into the signal to be sent on the air interface, is a problem worth consideration.

SUMMARY

This application provides a model training configuration method and a related apparatus, so that an AI task node configures at least one first additional module for a first AI training node, and this helps the first AI training node perform transmission of data, a parameter, and/or the like with a second AI training node via the at least one first additional module, to implement joint training between the first AI training node and the second AI training node.

A first aspect of this application provides a model training configuration method, including:

An AI task node sends first configuration information to a first AI training node, where the first configuration information is for configuring at least one first additional module; and the at least one first additional module is configured to map a symbol output by a first submodel of the first AI training node to a symbol to be output by the first AI training node on an air interface, and/or the at least one first additional module is configured to convert a symbol received by the first AI training node on an air interface into an update parameter for updating the first submodel. In this way, the first AI training node performs transmission of data, a parameter, and/or the like with a second AI training node via the at least one first additional module, to implement joint training between the first AI training node and the second AI training node.

Based on the first aspect, in a possible implementation, the method further includes: The AI task node sends a first request to the first AI training node, where the first request is for requesting the first AI training node to train the first submodel. In this way, a model training task is delivered to the first AI training node, to implement joint training between the first AI training node and the second AI training node.

A second aspect of this application provides a model training configuration method, including:

A first AI training node receives first configuration information from an AI task node, where the first configuration information is for configuring at least one first additional module. The first AI training node maps, by using the at least one first additional module, a symbol output by a first submodel of the first AI training node to a symbol to be output by the first AI training node on an air interface, and sends the to-be-output symbol to a second AI training node; and/or the first AI training node converts, by using the at least one first additional module, a symbol that is received by the first AI training node from the second AI training node on an air interface into an update parameter for updating the first submodel, and the first AI training node updates the first submodel by using the update parameter. It can be learned that the first AI training node receives the first configuration information from the AI task node, where the first configuration information is for configuring the at least one first additional module. In this way, the first AI training node performs transmission of data, a parameter, and/or the like with the second AI training node via the at least one first additional module, to implement joint training between the first AI training node and the second AI training node.

Based on the second aspect, in a possible implementation, the method further includes: The first AI training node receives a first request from the AI task node, where the first request is for requesting the first AI training node to train the first submodel. In this way, the first AI training node trains the first submodel, to implement joint training between the first AI training node and the second AI training node.

Based on the first aspect or the second aspect, in a possible implementation, the first configuration information includes at least one of the following: an index, a type, or a structure parameter of the at least one first additional module, first indication information, second indication information, third indication information, fourth indication information, or fifth indication information, where the first indication information indicates whether the at least one first additional module is to participate in training of the first submodel; the second indication information indicates whether the at least one first additional module is to be reported as a part of the first submodel to the AI task node; the third indication information indicates a deployment manner of each of the at least one first additional module, where the deployment manner includes serial deployment or parallel deployment; the fourth indication information indicates whether to indicate the type or the structure parameter of the at least one first additional module to the first AI training node; and the fifth indication information indicates a location at which each of the at least one first additional module is to be inserted into the first submodel. In this implementation, content included in the first configuration information is shown, which facilitates implementation of the solution. For example, the first configuration information may include some configurations of the at least one first additional module, for example, the type or the structure parameter of the at least one first additional module. The first AI training node may determine the deployment manner of each first additional module based on the third indication information, and may determine, based on the fifth indication information, the location at which each first additional module is to be inserted into the first submodel. In this way, the first AI training node determines the at least one first additional module. The first AI training node may determine, based on the first indication information, whether to train the at least one first additional module in a training process of the first submodel. The first AI training node may determine, based on the second indication information, whether to report the at least one first additional module when reporting a first submodel obtained through training.

Based on the first aspect or the second aspect, in a possible implementation, the first configuration information further includes an index of a first hypernetwork, and the first hypernetwork is for generating the at least one first additional module. In this implementation, the AI task node may indicate the index of the first hypernetwork to the first AI training node. In this way, the first AI training node generates the at least one first additional module. This helps reduce signaling overheads generated when the AI task node configures the at least one first additional module.

Based on the first aspect or the second aspect, in a possible implementation, the fifth indication information includes a first bitmap, a bit in the first bitmap corresponds to a neural network layer in the first submodel, and the bit in the first bitmap indicates whether to insert a first additional module for the neural network layer corresponding to the bit. In this implementation, a specific implementation form of the fifth indication information is shown, and the first bitmap indicates whether to insert a first additional module for each neural network layer.

Based on the first aspect or the second aspect, in a possible implementation, one bit in the first bitmap corresponds to one neural network layer in the first submodel; and when a value of the bit in the first bitmap is 1, it indicates to insert a corresponding first additional module between the neural network layer corresponding to the bit and a next neural network layer of the neural network layer corresponding to the bit; or when a value of the bit in the first bitmap is 0, it indicates to insert no first additional module between the neural network layer corresponding to the bit and a next neural network layer of the neural network layer corresponding to the bit; or when a value of the bit in the first bitmap is 0, it indicates to insert no first additional module between the neural network layer corresponding to the bit and a next neural network layer of the neural network layer corresponding to the bit; or when a value of the bit in the first bitmap is 1, it indicates to insert a corresponding first additional module between the neural network layer corresponding to the bit and a next neural network layer of the neural network layer corresponding to the bit. In this implementation, one bit in the first bitmap corresponds to one neural network layer. In this way, the value of the bit indicates whether to insert the first additional module for the neural network layer corresponding to the bit. Bit overheads generated in this implementation are low, and this facilitates implementation of the solution.

Based on the first aspect or the second aspect, in a possible implementation, the at least one first additional module includes a plurality of first additional modules; and the fifth indication information indicates to insert the plurality of first additional modules between an $X^{th}$ neural network layer and an $(X+1)^{th}$ neural network layer in the first submodel, where X is greater than or equal to 1 and less than a quantity of neural network layers included in the first submodel; and a sum of input dimensions of the plurality of first additional modules is equal to an output dimension of the $X^{th}$ neural network layer, and a sum of output dimensions of the plurality of first additional modules is equal to an input dimension of the $(X+1)^{th}$ neural network layer; or a sum of input dimensions of the plurality of first additional modules is greater than an output dimension of the $X^{th}$ neural network layer, zero padding is performed on output data of the $X^{th}$ neural network layer to enable the output dimension of the $X^{th}$ neural network layer to be equal to the sum of the input dimensions of the plurality of first additional modules, and dimension reduction is performed on output data of one or more of the plurality of first additional modules to enable a sum of output dimensions of the plurality of first additional modules to be equal to an input dimension of the $(X+1)^{th}$ neural network layer; or

the fifth indication information indicates to insert the plurality of first additional modules into an outermost neural network layer in the first submodel, where a sum of input dimensions of the plurality of first additional modules is equal to an output dimension of the outermost neural network layer; or a sum of input dimensions of the plurality of first additional modules is greater than an output dimension of the outermost neural network layer, and zero padding is performed on output data of the outermost neural network layer to enable the output dimension of the outermost neural network layer to be equal to the sum of the input dimensions of the plurality of first additional modules.

In this implementation, the AI task node may indicate, by using the fifth indication information, to insert a plurality of first additional modules into one neural network layer. In this way, a sum of dimensions of the plurality of first additional modules is equal to a dimension of the neural network layer. In this implementation, for the first AI training node, the first AI training node may store a first additional module with a low dimension. When a dimension of one first additional module is insufficient to adapt to a dimension of one neural network layer, the AI task node may configure a plurality of first additional modules for insertion into the neural network layer. Therefore, the first AI training node does not need to store various first additional modules with different dimensions based on a dimension of a neural network. In this way, a problem of storage pressure of storing the first additional modules by the first AI training node is avoided. It should be noted that the implementation may alternatively be used as an independent aspect, that is, a technical solution provided in another aspect independent of the first aspect or the second aspect. Specifically, this implementation does not depend on the first aspect or the second aspect.

Based on the first aspect or the second aspect, in a possible implementation, each of the at least one first additional module is a neural network or a signal processing module. An implementation form of the at least one first additional module is shown, and this facilitates execution of the solution.

Based on the first aspect or the second aspect, in a possible implementation, the first request includes at least one of the following: a structure of the first submodel, a first hyperparameter, a first loss function, a first training stopping condition, a number of the first submodel in a plurality of submodels, or a dataset, where the plurality of submodels are obtained by splitting, by the AI task node, a first model that an AI model node requests to train, the first training stopping condition is a condition for stopping training the first submodel by the first AI training node, and the dataset is used as input data of the first submodel. In this implementation, some possible content included in the first request is provided. In this way, the first AI training node trains the first submodel with reference to the content included in the first request.

Based on the first aspect, in a possible implementation, before the AI task node sends the first configuration information to the first AI training node, the method further includes: The AI task node sends a second request to the first AI training node, where the second request is for requesting channel state information between the first AI training node and the second AI training node. The AI task node receives the channel state information from the first AI training node. The AI task node determines the at least one first additional module based on a task type and the channel state information, where the task type is a type of a task requested by the AI model node from the AI task node. In this implementation, a possible implementation in which the AI task node determines the at least one first additional module is provided. The at least one first additional module should implement resistance to channel interference, and is related to the task type. Therefore, the AI task node determines the at least one first additional module based on the task type and the channel state information. This helps the AI task node configure an appropriate first additional module for the first AI training node, and transmission performance between the first AI training node and the second AI training node is improved.

Based on the second aspect, in a possible implementation, before the first AI training node receives the first configuration information from the first AI task node, the method further includes: The first AI training node receives a second request from the AI task node, where the second request is for requesting channel state information between the first AI training node and the second AI training node. The first AI training node sends a channel measurement signal to the second AI training node. The first AI training node receives the channel state information from the second AI training node, where the channel state information is obtained by the second AI training node by measuring the channel measurement signal. The first AI training node sends the channel state information to the AI task node. In this way, the AI task node obtains the channel state information, so that the AI task node configures an appropriate first additional module for the first AI training node, and transmission performance between the first AI training node and the second AI training node is improved.

Based on the first aspect, in a possible implementation, the method further includes: The AI task node sends second configuration information to the second AI training node, where the second configuration information is for configuring at least one second additional module; and the at least one second additional module is configured to convert the update parameter for updating the first submodel into the symbol to be output by the second AI training node on the air interface, and/or the at least one second additional module is configured to map the symbol received by the second AI training node on the air interface to a symbol to be input into a second submodel of the second AI training node. In this way, the second AI training node performs transmission of data, a parameter, and/or the like with the first AI training node via the at least one second additional module, to implement joint training between the first AI training node and the second AI training node.

Based on the first aspect, in a possible implementation, the method further includes: The AI task node sends a third request to the second AI training node, where the third request is for requesting the second AI training node to train the second submodel. In this way, a model training task is delivered to the second AI training node, to implement joint training between the first AI training node and the second AI training node.

Based on the second aspect, in a possible implementation, the at least one first additional module includes a first additional module 1; the fifth indication information indicates to insert the first additional module 1 between the $X^{th}$ neural network layer and the $(X+1)^{th}$ neural network layer in the first submodel, where X is greater than or equal to 1 and less than the quantity of neural network layers included in the first submodel, and an input dimension of the first additional module 1 is less than the output dimension of the $X^{th}$ neural network layer; and the method further includes: The first AI training node determines a first additional module 2, and the first AI training node inserts the first additional module 1 and the first additional module 2 between the $X^{th}$ neural network layer and the $(X+1)^{th}$ neural network layer, where a sum of the input dimension of the first additional module 1 and an input dimension of the first additional module 2 is equal to the output dimension of the $X^{th}$ neural network layer, and a sum of an output dimension of the first additional module 1 and an output dimension of the first additional module 2 is equal to the input dimension of the $(X+1)^{th}$ neural network layer; or a sum of the input dimension of the first additional module 1 and an input dimension of the first additional module 2 is greater than the output dimension of the $X^{th}$ neural network layer, zero padding is performed on output data of the $X^{th}$ neural network layer to enable the output dimension of the $X^{th}$ neural network layer to be equal to the sum of the input dimension of the first additional module 1 and the input dimension of the first additional module 2, and dimension reduction is performed on output data of the first additional module 1 and/or the first additional module 2 to enable a sum of an output dimension of the first additional module 1 and an output dimension of the first additional module 2 to be equal to the input dimension of the $(X+1)^{th}$ neural network layer; or

the at least one first additional module includes a first additional module 1; the fifth indication information indicates to insert the first additional module 1 into the outermost neural network layer in the first submodel; and the method further includes: The first AI training node determines a first additional module 2, and the first AI training node inserts the first additional module 1 and the first additional module 2 into the outermost neural network layer, where a sum of an input dimension of the first additional module 1 and an input dimension of the first additional module 2 is equal to the output dimension of the outermost neural network layer; or a sum of an input dimension of the first additional module 1 and an input dimension of the first additional module 2 is greater than the output dimension of the outermost neural network layer, and zero padding is performed on the output data of the outermost neural network layer to enable the output dimension of the outermost neural network layer to be equal to the sum of the input dimension of the first additional module 1 and the input dimension of the first additional module 2.

In this implementation, the AI task node may indicate, by using the fifth indication information, to insert the first additional module 1 into one neural network layer. A dimension of the first additional module 1 is far less than a dimension of the neural network layer. Therefore, the first AI training node may determine a second additional module 2, and insert the first additional module 1 and the first additional module 2 into the neural network layer. In this way, a sum of the dimension of the first additional module 1 and a dimension of the first additional module 2 is equal to the dimension of the neural network layer. In this implementation, for the first AI training node, the first AI training node may store the first additional module with the low dimension. When a dimension of one first additional module is insufficient to adapt to a dimension of one neural network layer, the first AI training node may determine a plurality of first additional modules for insertion into the neural network layer. Therefore, the first AI training node does not need to store the various first additional modules with the different dimensions based on the dimension of the neural network. In this way, the problem of the storage pressure of storing the first additional modules by the first AI training node is avoided. It should be noted that the implementation may alternatively be used as an independent aspect, that is, a technical solution provided in another aspect independent of the first aspect or the second aspect. Specifically, this implementation does not depend on the first aspect or the second aspect.

Based on the second aspect, in a possible implementation, the method further includes: The first AI training node performs redundancy processing on the to-be-output symbol by using a first redundancy processing module, and then sends a to-be-output symbol obtained through redundancy processing to the second AI training node; and/or the first AI training node performs, by using the first redundancy processing module, redundancy removal processing on the symbol that is received by the first AI training node from the second AI training node on the air interface, and then converts a symbol obtained through redundancy removal processing into the update parameter by using the at least one first additional module. In this implementation, the first AI training node may perform redundancy processing on the to-be-output symbol, to implement redundancy sending. This helps increase a power gain of a signal sent by the first AI training node, and further helps increase a data augmentation gain. It should be noted that the implementation may alternatively be used as an independent aspect, that is, a technical solution provided in another aspect independent of the first aspect or the second aspect. Specifically, this implementation does not depend on the first aspect or the second aspect.

Based on the second aspect, in a possible implementation, a dimension of the first redundancy processing module is equal to a product of a redundancy multiple and a dimension of the at least one first additional module. In this way, redundancy sending is performed on a symbol output by the at least one first additional module.

Based on the second aspect, in a possible implementation, the method further includes: The first AI training node sends the channel measurement signal to the second AI training node. The first AI training node receives the redundancy multiple from the second AI training node, where the redundancy multiple is determined by the second AI training node by measuring the channel measurement signal. In this way, the first AI training node obtains the redundancy multiple.

Based on the second aspect, in a possible implementation, the method further includes: The first AI training node sends the channel measurement signal to the second AI training node. The first AI training node receives the channel state information from the second AI training node, where the channel state information is obtained by the second AI training node by measuring the channel measurement signal. The first AI training node determines the redundancy multiple based on the channel state information. In this way, the first AI training node obtains the redundancy multiple.

Based on the second aspect, in a possible implementation, the first redundancy processing module is a neural network or a signal processing module.

A third aspect of this application provides a model training configuration method, including:

An AI task node sends second configuration information to a second AI training node, where the second configuration information is for configuring at least one second additional module; and the at least one second additional module is configured to convert an update parameter for updating a first submodel into a symbol to be output by the second AI training node on an air interface, and/or the at least one second additional module is configured to map a symbol received by the second AI training node on an air interface to a symbol to be input into a second submodel of the second AI training node. In this way, the second AI training node performs transmission of data, a parameter, and/or the like with a first AI training node via the at least one second additional module, to implement joint training between the first AI training node and the second AI training node.

Based on the third aspect, in a possible implementation, the method further includes: The AI task node sends a third request to the second AI training node, where the third request is for requesting the second AI training node to train the second submodel. In this way, a model training task is delivered to the second AI training node, to implement joint training between the first AI training node and the second AI training node.

A fourth aspect of this application provides a model training configuration method, including:

A second AI training node receives second configuration information from an AI task node, where the second configuration information is for configuring at least one second additional module. The second AI training node converts, by using the at least one second additional module, an update parameter for updating a first submodel of a first AI training node into a symbol to be output by the second AI training node on an air interface, and sends the to-be-output symbol to the first AI training node; and/or the second AI training node maps, by using the at least one second additional module, a symbol that is received by the second AI training node from the first AI training node on an air interface to a symbol to be input into a second submodel of the second AI training node. It can be learned that the second AI training node receives the second configuration information from the AI task node, where the second configuration information is for configuring the at least one second additional module. In this way, the second AI training node performs transmission of data, a parameter, and/or the like with the first AI training node via the at least one second additional module, to implement joint training between the first AI training node and the second AI training node.

Based on the fourth aspect, in a possible implementation, the method further includes: The second AI training node receives a third request from the AI task node, where the third request is for requesting the second AI training node to train the second submodel. In this way, the second AI training node trains the second submodel, to implement joint training between the first AI training node and the second AI training node.

Based on the third aspect or the fourth aspect, in a possible implementation, the second configuration information includes at least one of the following: an index, a type, or a structure parameter of the at least one second additional module, sixth indication information, seventh indication information, eighth indication information, ninth indication information, or tenth indication information, where the sixth indication information indicates whether the at least one second additional module is to participate in training of the second submodel; the seventh indication information indicates whether the at least one second additional module is to be reported as a part of the second submodel to the AI task node; the eighth indication information indicates a deployment manner of each of the at least one second additional module, where the deployment manner includes serial deployment or parallel deployment; the ninth indication information indicates whether to indicate the type or the structure parameter of the at least one second additional module to the second AI training node; and the tenth indication information indicates a location at which each of the at least one second additional module is to be inserted into the second submodel. Beneficial effects of this implementation are similar to those of the implementation of the content included in the first configuration information in the first aspect or the second aspect. For details, refer to the foregoing related descriptions.

Based on the third aspect or the fourth aspect, in a possible implementation, the second configuration information further includes an index of a second hypernetwork, and the second hypernetwork is for generating the at least one second additional module. This implementation is similar to the implementation in which the first configuration information further includes the index of the first hypernetwork in the first aspect or the second aspect. For details, refer to the foregoing related descriptions.

Based on the third aspect or the fourth aspect, in a possible implementation, the tenth indication information includes a second bitmap, a bit in the second bitmap corresponds to a neural network layer in the second submodel, and the bit in the second bitmap indicates whether to insert a second additional module for the neural network layer corresponding to the bit. This implementation is similar to the first bitmap in the first aspect or the second aspect. For details, refer to the foregoing related descriptions.

Based on the third aspect or the fourth aspect, in a possible implementation, one bit in the second bitmap corresponds to one neural network layer in the second submodel; and when a value of the bit in the second bitmap is 1, it indicates to insert a corresponding second additional module between the neural network layer corresponding to the bit and a next neural network layer of the neural network layer corresponding to the bit; or when a value of the bit in the second bitmap is 0, it indicates to insert no second additional module between the neural network layer corresponding to the bit and a next neural network layer of the neural network layer corresponding to the bit; or when a value of the bit in the second bitmap is 0, it indicates to insert no second additional module between the neural network layer corresponding to the bit and a next neural network layer of the neural network layer corresponding to the bit; or when a value of the bit in the second bitmap is 1, it indicates to insert a corresponding second additional module between the neural network layer corresponding to the bit and a next neural network layer of the neural network layer corresponding to the bit. This implementation is similar to the first bitmap in the first aspect or the second aspect. For details, refer to the foregoing related descriptions.

Based on the third aspect or the fourth aspect, in a possible implementation, the at least one second additional module includes a plurality of second additional modules; and the tenth indication information indicates to insert the plurality of second additional modules between a $Y^{th}$ neural network layer and a $(Y+1)^{th}$ neural network layer in the second submodel, where Y is greater than or equal to 1 and less than a quantity of neural network layers included in the second submodel; and a sum of input dimensions of the plurality of second additional modules is equal to an output dimension of the $Y^{th}$ neural network layer, and a sum of output dimensions of the plurality of second additional modules is equal to an input dimension of the $(Y+1)^{th}$ neural network layer; or a sum of input dimensions of the plurality of second additional modules is greater than an output dimension of the $Y^{th}$ neural network layer, zero padding is performed on output data of the $Y^{th}$ neural network layer to enable the output dimension of the $Y^{th}$ neural network layer to be equal to the sum of the input dimensions of the plurality of second additional modules, and dimension reduction is performed on output data of one or more of the plurality of second additional modules to enable a sum of output dimensions of the plurality of second additional modules to be equal to an input dimension of the $(Y+1)^{th}$ neural network layer; or

the tenth indication information indicates to insert the plurality of second additional modules into an outermost neural network layer in the second submodel, where a sum of input dimensions of the plurality of second additional modules is equal to an output dimension of the outermost neural network layer; or a sum of input dimensions of the plurality of second additional modules is greater than an output dimension of the outermost neural network layer, and zero padding is performed on output data of the outermost neural network layer to enable the output dimension of the outermost neural network layer to be equal to the sum of the input dimensions of the plurality of second additional modules. This implementation is similar to the implementation of inserting the plurality of first additional modules into one neural network layer in the first aspect or the second aspect. For details, refer to the foregoing related descriptions.

Based on the third aspect or the fourth aspect, in a possible implementation, each of the at least one second additional module is a neural network or a signal processing module.

Based on the third aspect or the fourth aspect, in a possible implementation, the third request includes at least one of the following: a structure of the second submodel, a second hyperparameter, a second loss function, a second training stopping condition, or a number of the second submodel in a plurality of submodels, where the plurality of submodels are obtained by splitting, by the **AI** task node, a first model that an AI model node requests to train, and the second training stopping condition is a condition for stopping training the second submodel by the second AI training node. This implementation is similar to the first request in the first aspect or the second aspect. For details, refer to the foregoing related descriptions of the beneficial effects.

Based on the fourth aspect, in a possible implementation, before the second AI training node receives the second configuration information from the AI task node, the method further includes: The second AI training node receives a channel measurement signal from the first AI training node. The second AI training node sends channel state information to the first AI training node, where the channel state information is obtained by the second AI training node by measuring the channel measurement signal. In this way, the first AI training node provides the channel state information for the AI task node, so that the AI task node configures an appropriate second additional module for the second AI training node.

Based on the fourth aspect, in a possible implementation, the at least one second additional module includes a second additional module 1; the tenth indication information indicates to insert the second additional module 1 between the $Y^{th}$ neural network layer and the $(Y+1)^{th}$ neural network layer in the second submodel, where Y is greater than or equal to 1 and less than the quantity of neural network layers included in the second submodel, and an input dimension of the second additional module 1 is less than the output dimension of the $Y^{th}$ neural network layer; and the method further includes: The second AI training node determines a second additional module 2, and the second AI training node inserts the second additional module 1 and the second additional module 2 between the $Y^{th}$ neural network layer and the $(Y+1)^{th}$ neural network layer, where a sum of the input dimension of the second additional module 1 and an input dimension of the second additional module 2 is equal to the output dimension of the $Y^{th}$ neural network layer, and a sum of an output dimension of the second additional module 1 and an output dimension of the second additional module 2 is equal to the input dimension of the $(Y+1)^{th}$ neural network layer; or a sum of the input dimension of the second additional module 1 and an input dimension of the second additional module 2 is greater than the output dimension of the $Y^{th}$ neural network layer, zero padding is performed on the output data of the $Y^{th}$ neural network layer to enable the output dimension of the $Y^{th}$ neural network layer to be equal to the sum of the input dimension of the second additional module 1 and the input dimension of the second additional module 2, and dimension reduction is performed on output data of the second additional module 1 and/or the second additional module 2 to enable a sum of an output dimension of the second additional module 1 and an output dimension of the second additional module 2 to be equal to the input dimension of the $(Y+1)^{th}$ neural network layer; or

the at least one second additional module includes a second additional module 1; the tenth indication information indicates to insert the second additional module 1 into the outermost neural network layer in the second submodel; and the method further includes: The second AI training node determines a second additional module 2, and the second AI training node inserts the second additional module 1 and the second additional module 2 into the outermost neural network layer, where a sum of an input dimension of the second additional module 1 and an input dimension of the second additional module 2 is equal to the output dimension of the outermost neural network layer; or a sum of an input dimension of the second additional module 1 and an input dimension of the second additional module 2 is greater than the output dimension of the outermost neural network layer, and zero padding is performed on the output data of the outermost neural network layer to enable the output dimension of the outermost neural network layer to be equal to the sum of the input dimension of the second additional module 1 and the input dimension of the second additional module 2.

Based on the fourth aspect, in a possible implementation, the method further includes: The second AI training node performs redundancy processing on the to-be-output symbol by using a second redundancy processing module, and then sends a to-be-output symbol to the first AI training node; and/or the second AI training node performs, by using the second redundancy processing module, redundancy removal processing on the symbol that is received by the second AI training node from the first AI training node on the air interface, and then converts, by using the at least one second additional module, a symbol obtained through redundancy removal processing into the symbol to be input into the second submodel of the second AI training node. This implementation is similar to the process in which the first AI training node performs redundancy sending or redundancy receiving by using the first redundancy processing module in the first aspect or the second aspect. For specific beneficial effects, refer to the foregoing related descriptions.

Based on the fourth aspect, in a possible implementation, a dimension of the second redundancy processing module is equal to a product of a redundancy multiple and a dimension of the at least one second additional module. In this way, redundancy sending is performed on a symbol output by the at least one second additional module.

Based on the fourth aspect, in a possible implementation, the method further includes: The second AI training node receives the channel measurement signal from the first AI training node. The second AI training node sends the redundancy multiple to the first AI training node, where the redundancy multiple is determined by the second AI training node by measuring the channel measurement signal. In this way, both the first AI training node and the second AI training node obtain the redundancy multiple.

Based on the fourth aspect, in a possible implementation, the method further includes: The second AI training node receives the channel measurement signal from the first AI training node. The second AI training node sends the channel state information to the first AI training node, where the channel state information is obtained by the second AI training node by measuring the channel measurement signal, and the channel state information is for determining the redundancy multiple. In this way, the first AI training node determines the redundancy multiple.

Based on the fourth aspect, in a possible implementation, the method further includes: The second AI training node receives the redundancy multiple from the first AI training node.

Based on the fourth aspect, in a possible implementation, the second redundancy processing module is a neural network or a signal processing module.

A fifth aspect of this application provides a first communication apparatus, including:

a transceiver module, configured to send first configuration information to a second communication apparatus, where the first configuration information is for configuring at least one first additional module; and the at least one first additional module is configured to map a symbol output by a first submodel of the second communication apparatus to a symbol to be output by the second communication apparatus on an air interface, and/or the at least one first additional module is configured to convert a symbol received by the second communication apparatus on an air interface into an update parameter for updating the first submodel.

Based on the fifth aspect, in a possible implementation, the transceiver module is further configured to send a first request to the second communication apparatus, where the first request is for requesting the second communication apparatus to train the first submodel.

A sixth aspect of this application provides a second communication apparatus, including:

a transceiver module, configured to receive first configuration information from a first communication apparatus, where the first configuration information is for configuring at least one first additional module; and
a processing module, configured to: map, by using the at least one first additional module, a symbol output by a first submodel of the second communication apparatus to a symbol to be output by the second communication apparatus on an air interface, and send the to-be-output symbol to a second AI training node; and/or convert, by using the at least one first additional module, a symbol that is received by the second communication apparatus from the second AI training node on an air interface into an update parameter for updating the first submodel, and update the first submodel by using the update parameter.

Based on the sixth aspect, in a possible implementation, the transceiver module is further configured to receive a first request from the first communication apparatus, where the first request is for requesting the second communication apparatus to train the first submodel.

Based on the fifth aspect or the sixth aspect, in a possible implementation, the first configuration information includes at least one of the following: an index, a type, or a structure parameter of the at least one first additional module, first indication information, second indication information, third indication information, fourth indication information, or fifth indication information, where the first indication information indicates whether the at least one first additional module is to participate in training of the first submodel; the second indication information indicates whether the at least one first additional module is to be reported as a part of the first submodel to the first communication apparatus; the third indication information indicates a deployment manner of each of the at least one first additional module, where the deployment manner includes serial deployment or parallel deployment; the fourth indication information indicates whether to indicate the type or the structure parameter of the at least one first additional module to the second communication apparatus; and the fifth indication information indicates a location at which each of the at least one first additional module is to be inserted into the first submodel.

Based on the fifth aspect or the sixth aspect, in a possible implementation, the first configuration information further includes an index of a first hypernetwork, and the first hypernetwork is for generating the at least one first additional module.

Based on the fifth aspect or the sixth aspect, in a possible implementation, the fifth indication information includes a first bitmap, a bit in the first bitmap corresponds to a neural network layer in the first submodel, and the bit in the first bitmap indicates whether to insert a first additional module for the neural network layer corresponding to the bit.

Based on the fifth aspect or the sixth aspect, in a possible implementation, one bit in the first bitmap corresponds to one neural network layer in the first submodel; and when a value of the bit in the first bitmap is 1, it indicates to insert a corresponding first additional module between the neural network layer corresponding to the bit and a next neural network layer of the neural network layer corresponding to the bit; or when a value of the bit in the first bitmap is 0, it indicates to insert no first additional module between the neural network layer corresponding to the bit and a next neural network layer of the neural network layer corresponding to the bit; or when a value of the bit in the first bitmap is 0, it indicates to insert no first additional module between the neural network layer corresponding to the bit and a next neural network layer of the neural network layer corresponding to the bit; or when a value of the bit in the first bitmap is 1, it indicates to insert a corresponding first additional module between the neural network layer corresponding to the bit and a next neural network layer of the neural network layer corresponding to the bit.

Based on the fifth aspect or the sixth aspect, in a possible implementation, the at least one first additional module includes a plurality of first additional modules; and the fifth indication information indicates to insert the plurality of first additional modules between an $X^{th}$ neural network layer and an $(X+1)^{th}$ neural network layer in the first submodel, where X is greater than or equal to 1 and less than a quantity of neural network layers included in the first submodel; and a sum of input dimensions of the plurality of first additional modules is equal to an output dimension of the $X^{th}$ neural network layer, and a sum of output dimensions of the plurality of first additional modules is equal to an input dimension of the $(X+1)^{th}$ neural network layer; or a sum of input dimensions of the plurality of first additional modules is greater than an output dimension of the $X^{th}$ neural network layer, zero padding is performed on output data of the $X^{th}$ neural network layer to enable the output dimension of the $X^{th}$ neural network layer to be equal to the sum of the input dimensions of the plurality of first additional modules, and dimension reduction is performed on output data of one or more of the plurality of first additional modules to enable a sum of output dimensions of the plurality of first additional modules to be equal to an input dimension of the $(X+1)^{th}$ neural network layer; or

the fifth indication information indicates to insert the plurality of first additional modules into an outermost neural network layer in the first submodel, where a sum of input dimensions of the plurality of first additional modules is equal to an output dimension of the outermost neural network layer; or a sum of input dimensions of the plurality of first additional modules is greater than an output dimension of the outermost neural network layer, and zero padding is performed on output data of the outermost neural network layer to enable the output dimension of the outermost neural network layer to be equal to the sum of the input dimensions of the plurality of first additional modules.

Based on the fifth aspect or the sixth aspect, in a possible implementation, each of the at least one first additional module is a neural network or a signal processing module.

Based on the fifth aspect or the sixth aspect, in a possible implementation, the first request includes at least one of the following: a structure of the first submodel, a first hyperparameter, a first loss function, a first training stopping condition, a number of the first submodel in a plurality of submodels, or a dataset, where the plurality of submodels are obtained by splitting, by the first communication apparatus, a first model that an AI model node requests to train, the first training stopping condition is a condition for stopping training the first submodel by the second communication apparatus, and the dataset is used as input data of the first submodel.

Based on the fifth aspect, in a possible implementation, the transceiver module is further configured to: send a second request to the second communication apparatus, where the second request is for requesting channel state information between the second communication apparatus and the second AI training node; and receive the channel state information from the second communication apparatus. The first communication apparatus further includes a processing module, where the processing module is configured to determine the at least one first additional module based on a task type and the channel state information, where the task type is a type of a task requested by the AI model node from the first communication apparatus.

Based on the sixth aspect, in a possible implementation, the transceiver module is further configured to: receive a second request from the first communication apparatus, where the second request is for requesting channel state information between the second communication apparatus and a second AI training node; send a channel measurement signal to the second AI training node; receive the channel state information from the second AI training node, where the channel state information is obtained by the second AI training node by measuring the channel measurement signal; and send the channel state information to the first communication apparatus.

Based on the fifth aspect, in a possible implementation, the transceiver module is further configured to send second configuration information to the second AI training node, where the second configuration information is for configuring at least one second additional module; and the at least one second additional module is configured to convert the update parameter for updating the first submodel into the symbol to be output by the second AI training node on the air interface, and/or the at least one second additional module is configured to map the symbol received by the second AI training node on the air interface to a symbol to be input into a second submodel of the second AI training node.

Based on the fifth aspect, in a possible implementation, the transceiver module is further configured to send a third request to the second AI training node, where the third request is for requesting the second AI training node to train the second submodel.

Based on the sixth aspect, in a possible implementation, the at least one first additional module includes a first additional module 1; the fifth indication information indicates to insert the first additional module 1 between the $X^{th}$ neural network layer and the $(X+1)^{th}$ neural network layer in the first submodel, where X is greater than or equal to 1 and less than the quantity of neural network layers included in the first submodel, and an input dimension of the first additional module 1 is less than the output dimension of the $X^{th}$ neural network layer; and the processing module is further configured to:

determine a first additional module 2, and insert the first additional module 1 and the first additional module 2 between the $X^{th}$ neural network layer and the $(X+1)^{th}$ neural network layer, where a sum of the input dimension of the first additional module 1 and an input dimension of the first additional module 2 is equal to the output dimension of the $X^{th}$ neural network layer, and a sum of an output dimension of the first additional module 1 and an output dimension of the first additional module 2 is equal to the input dimension of the $(X+1)^{th}$ neural network layer; or a sum of the input dimension of the first additional module 1 and an input dimension of the first additional module 2 is greater than the output dimension of the $X^{th}$ neural network layer, zero padding is performed on the output data of the $X^{th}$ neural network layer to enable the output dimension of the $X^{th}$ neural network layer to be equal to the sum of the input dimension of the first additional module 1 and the input dimension of the first additional module 2, and dimension reduction is performed on output data of the first additional module 1 and/or the first additional module 2 to enable a sum of an output dimension of the first additional module 1 and an output dimension of the first additional module 2 to be equal to the input dimension of the $(X+1)^{th}$ neural network layer; or

the at least one first additional module includes a first additional module 1; the fifth indication information indicates to insert the first additional module 1 into the outermost neural network layer in the first submodel; and the processing module is further configured to:

determine a first additional module 2, where the second communication apparatus inserts the first additional module 1 and the first additional module 2 into the outermost neural network layer, where a sum of an input dimension of the first additional module 1 and an input dimension of the first additional module 2 is equal to the output dimension of the outermost neural network layer; or a sum of an input dimension of the first additional module 1 and an input dimension of the first additional module 2 is greater than the output dimension of the outermost neural network layer, and zero padding is performed on the output data of the outermost neural network layer to enable the output dimension of the outermost neural network layer to be equal to the sum of the input dimension of the first additional module 1 and the input dimension of the first additional module 2.

Based on the sixth aspect, in a possible implementation, the processing module is further configured to: perform redundancy processing on the to-be-output symbol by using a first redundancy processing module, and then send a to-be-output symbol obtained through redundancy processing to the second AI training node; and/or perform, by using the first redundancy processing module, redundancy removal processing on the symbol that is received by the second communication apparatus from the second AI training node on the air interface, and then convert a symbol obtained through redundancy removal processing into the update parameter by using the at least one first additional module.

Based on the sixth aspect, in a possible implementation, a dimension of the first redundancy processing module is equal to a product of a redundancy multiple and a dimension of the at least one first additional module.

Based on the sixth aspect, in a possible implementation, the transceiver module is further configured to: send the channel measurement signal to the second AI training node, and receive the redundancy multiple from the second AI training node, where the redundancy multiple is determined by the second AI training node by measuring the channel measurement signal.

Based on the sixth aspect, in a possible implementation, the transceiver module is further configured to: send the channel measurement signal to the second AI training node, and receive the channel state information from the second AI training node, where the channel state information is obtained by the second AI training node by measuring the channel measurement signal; and the processing module is further configured to determine the redundancy multiple based on the channel state information.

Based on the sixth aspect, in a possible implementation, the first redundancy processing module is a neural network or a signal processing module.

A seventh aspect of this application provides a first communication apparatus, including:
a transceiver module, configured to send second configuration information to a third communication apparatus, where the second configuration information is for configuring at least one second additional module; and the at least one second additional module is configured to convert an update parameter for updating a first submodel into a symbol to be output by the third communication apparatus on an air interface, and/or the at least one second additional module is configured to map a symbol received by the third communication apparatus on an air interface to a symbol to be input into a second submodel of the third communication apparatus.

Based on the seventh aspect, in a possible implementation, the transceiver module is further configured to send a third request to the third communication apparatus, where the third request is for requesting the third communication apparatus to train the second submodel.

An eighth aspect of this application provides a third communication apparatus, including:

a transceiver module, configured to receive second configuration information from a first communication apparatus, where the second configuration information is for configuring at least one second additional module; and
a processing module, configured to: convert, by using the at least one second additional module, an update parameter for updating a first submodel of a first AI training node into a symbol to be output by the third communication apparatus on an air interface, and send the to-be-output symbol to the first AI training node; and/or map, by using the at least one second additional module, a symbol that is received by the third communication apparatus from the first AI training node on an air interface to a symbol to be input into a second submodel of the third communication apparatus.

Based on the eighth aspect, in a possible implementation, the transceiver module is further configured to receive a third request from the first communication apparatus, where the third request is for requesting the third communication apparatus to train the second submodel.

For other possible implementations of the seventh aspect or the eighth aspect, refer to the related descriptions in the third aspect or the fourth aspect. Details are not described one by one herein again.

Based on the seventh aspect or the eighth aspect, in a possible implementation, the second configuration information includes at least one of the following: an index, a type, or a structure parameter of the at least one second additional module, sixth indication information, seventh indication information, eighth indication information, ninth indication information, or tenth indication information, where the sixth indication information indicates whether the at least one second additional module is to participate in training of the second submodel; the seventh indication information indicates whether the at least one second additional module is to be reported as a part of the second submodel to the first communication apparatus; the eighth indication information indicates a deployment manner of each of the at least one second additional module, where the deployment manner includes serial deployment or parallel deployment; the ninth indication information indicates whether to indicate the type or the structure parameter of the at least one second additional module to the third communication apparatus; and the tenth indication information indicates a location at which each of the at least one second additional module is to be inserted into the second submodel.

Based on the seventh aspect or the eighth aspect, in a possible implementation, the second configuration information further includes an index of a second hypernetwork, and the second hypernetwork is for generating the at least one second additional module.

Based on the seventh aspect or the eighth aspect, in a possible implementation, the tenth indication information includes a second bitmap, a bit in the second bitmap corresponds to a neural network layer in the second submodel, and the bit in the second bitmap indicates whether to insert a second additional module for the neural network layer corresponding to the bit.

Based on the seventh aspect or the eighth aspect, in a possible implementation, one bit in the second bitmap corresponds to one neural network layer in the second submodel; and when a value of the bit in the second bitmap is 1, it indicates to insert a corresponding second additional module between the neural network layer corresponding to the bit and a next neural network layer of the neural network layer corresponding to the bit; or when a value of the bit in the second bitmap is 0, it indicates to insert no second additional module between the neural network layer corresponding to the bit and a next neural network layer of the neural network layer corresponding to the bit; or when a value of the bit in the second bitmap is 0, it indicates to insert no second additional module between the neural network layer corresponding to the bit and a next neural network layer of the neural network layer corresponding to the bit; or when a value of the bit in the second bitmap is 1, it indicates to insert a corresponding second additional module between the neural network layer corresponding to the bit and a next neural network layer of the neural network layer corresponding to the bit.

Based on the seventh aspect or the eighth aspect, in a possible implementation, the at least one second additional module includes a plurality of second additional modules; and the tenth indication information indicates to insert the plurality of second additional modules between a $Y^{th}$ neural network layer and a $(Y+1)^{th}$ neural network layer in the second submodel, where Y is greater than or equal to 1 and less than a quantity of neural network layers included in the second submodel; and a sum of input dimensions of the plurality of second additional modules is equal to an output dimension of the $Y^{th}$ neural network layer, and a sum of output dimensions of the plurality of second additional modules is equal to an input dimension of the $(Y+1)^{th}$ neural network layer; or a sum of input dimensions of the plurality of second additional modules is greater than an output dimension of the $Y^{th}$ neural network layer, zero padding is performed on output data of the $Y^{th}$ neural network layer to enable the output dimension of the $Y^{th}$ neural network layer to be equal to the sum of the input dimensions of the plurality of second additional modules, and dimension reduction is performed on output data of one or more of the plurality of second additional modules to enable a sum of output dimensions of the plurality of second additional modules to be equal to an input dimension of the $(Y+1)^{th}$ neural network layer; or the tenth indication information indicates to insert the plurality of second additional modules into an outermost neural network layer in the second submodel, where a sum of input dimensions of the plurality of second additional modules is equal to an output dimension of the outermost neural network layer; or a sum of input dimensions of the plurality of second additional modules is greater than an output dimension of the outermost neural network layer, and zero padding is performed on output data of the outermost neural network layer to enable the output dimension of the outermost neural network layer to be equal to the sum of the input dimensions of the plurality of second additional modules.

Based on the seventh aspect or the eighth aspect, in a possible implementation, each of the at least one second additional module is a neural network or a signal processing module.

Based on the seventh aspect or the eighth aspect, in a possible implementation, the third request includes at least one of the following: a structure of the second submodel, a second hyperparameter, a second loss function, a second training stopping condition, or a number of the second submodel in a plurality of submodels, where the plurality of submodels are obtained by splitting, by the first communication apparatus, a first model that an AI model node requests to train, and the second training stopping condition is a condition for stopping training the second submodel by the third communication apparatus.

Based on the eighth aspect, in a possible implementation, the transceiver module is further configured to: receive a channel measurement signal from the first AI training node, and send channel state information to the first AI training node, where the channel state information is obtained by the third communication apparatus by measuring the channel measurement signal.

Based on the eighth aspect, in a possible implementation, the at least one second additional module includes a second additional module 1; the tenth indication information indicates to insert the second additional module 1 between the $Y^{th}$ neural network layer and the $(Y+1)^{th}$ neural network layer in the second submodel, where Y is greater than or equal to 1 and less than the quantity of neural network layers included in the second submodel, and an input dimension of the second additional module 1 is less than the output dimension of the $Y^{th}$ neural network layer; and the processing module is further configured to: determine a second additional module 2, and insert the second additional module 1 and the second additional module 2 between the $Y^{th}$ neural network layer and the $(Y+1)^{th}$ neural network layer, where a sum of the input dimension of the second additional module 1 and an input dimension of the second additional module 2 is equal to the output dimension of the $Y^{th}$ neural network layer, and a sum of an output dimension of the second additional module 1 and an output dimension of the second additional module 2 is equal to the input dimension of the $(Y+1)^{th}$ neural network layer; or a sum of the input dimension of the second additional module 1 and an input dimension of the second additional module 2 is greater than the output dimension of the $Y^{th}$ neural network layer, zero padding is performed on the output data of the $Y^{th}$ neural network layer to enable the output dimension of the $Y^{th}$ neural network layer to be equal to the sum of the input dimension of the second additional module 1 and the input dimension of the second additional module 2, and dimension reduction is performed on output data of the second additional module 1 and/or the second additional module 2 to enable a sum of an output dimension of the second additional module 1 and an output dimension of the second additional module 2 to be equal to the input dimension of the (Y+1)$^{th}$ neural network layer; or

the at least one second additional module includes a second additional module 1; the tenth indication information indicates to insert the second additional module 1 into the outermost neural network layer in the second submodel; and the processing module is further configured to: determine a second additional module 2, and insert the second additional module 1 and the second additional module 2 into the outermost neural network layer, where a sum of an input dimension of the second additional module 1 and an input dimension of the second additional module 2 is equal to the output dimension of the outermost neural network layer; or a sum of an input dimension of the second additional module 1 and an input dimension of the second additional module 2 is greater than the output dimension of the outermost neural network layer, and zero padding is performed on the output data of the outermost neural network layer to enable the output dimension of the outermost neural network layer to be equal to the sum of the input dimension of the second additional module 1 and the input dimension of the second additional module 2.

Based on the eighth aspect, in a possible implementation, the processing module is further configured to: perform redundancy processing on the to-be-output symbol by using a second redundancy processing module, and then send a to-be-output symbol to the first AI training node; and/or perform, by using the second redundancy processing module, redundancy removal processing on the symbol that is received by the third communication apparatus from the first AI training node on the air interface, and then convert, by using the at least one second additional module, a symbol obtained through redundancy removal processing into the symbol to be input into the second submodel of the third communication apparatus.

Based on the eighth aspect, in a possible implementation, a dimension of the second redundancy processing module is equal to a product of a redundancy multiple and a dimension of the at least one second additional module.

Based on the eighth aspect, in a possible implementation, the transceiver module is further configured to: receive the channel measurement signal from the first AI training node, and send the redundancy multiple to the first AI training node, where the redundancy multiple is determined by the third communication apparatus by measuring the channel measurement signal.

Based on the eighth aspect, in a possible implementation, the transceiver module is further configured to: receive the channel measurement signal from the first AI training node, and send the channel state information to the first AI training node, where the channel state information is obtained by the third communication apparatus by measuring the channel measurement signal, and the channel state information is for determining the redundancy multiple.

Based on the eighth aspect, in a possible implementation, the transceiver module is further configured to receive the redundancy multiple from the first AI training node.

Based on the eighth aspect, in a possible implementation, the second redundancy processing module is a neural network or a signal processing module.

A ninth aspect of this application provides a communication apparatus. The communication apparatus includes a processor. The processor is configured to invoke a computer program or computer instructions in a memory, so that the processor implements any one of the implementations of any one of the first aspect to the fourth aspect.

Optionally, the communication apparatus further includes a transceiver, and the processor is configured to control the transceiver to receive and send signals.

A tenth aspect of this application provides a communication apparatus. The communication apparatus includes a processor, and the processor is configured to perform any one of the implementations of any one of the first aspect to the fourth aspect.

An eleventh aspect of this application provides a computer program product including instructions. When the computer program product runs on a computer, the computer is enabled to perform any one of the implementations of any one of the first aspect to the fourth aspect.

A twelfth aspect of this application provides a computer-readable storage medium, including computer instructions. When the instructions are run on a computer, the computer is enabled to perform any one of the implementations of any one of the first aspect to the fourth aspect.

A thirteenth aspect of this application provides a chip apparatus, including a processor, configured to invoke a computer program or computer instructions in a memory, so that the processor performs any one of the implementations of any one of the first aspect to the fourth aspect.

Optionally, the processor is coupled to the memory through an interface.

A fourteenth aspect of this application provides a communication system. The communication system includes an AI task node and a first AI training node. The AI task node is configured to perform the method shown in the first aspect, and the first AI training node is configured to perform the method shown in the second aspect. Optionally, the communication system further includes a third AI training node. The AI task node is configured to perform the method shown in the third aspect, and the third AI training node is configured to perform the method shown in the fourth aspect.

A fifteenth aspect of this application provides a communication system. The communication system includes a first AI training node and a second AI training node. The first AI training node is configured to perform the method shown in the second aspect, and the second AI training node is configured to perform the method shown in the fourth aspect.

Optionally, the communication system further includes an AI task node. The AI task node is configured to perform the method shown in the first aspect or the third aspect.

**BRIEF DESCRIPTION OF DRAWINGS**

FIG. 1A is a diagram of a structure of a communication system according to an embodiment of this application;

FIG. 1B is a diagram of another structure of a communication system according to an embodiment of this application;

FIG. 1C is a diagram of still another structure of a communication system according to an embodiment of this application;

FIG. 1D is a diagram of yet another structure of a communication system according to an embodiment of this application;

FIG. 2A is a diagram of yet another structure of a communication system according to an embodiment of this application;

FIG. 2B is a diagram of yet another structure of a communication system according to an embodiment of this application;

FIG. 2C is a diagram of yet another structure of a communication system according to an embodiment of this application;

FIG. 2D is a diagram of a structure of a neural network according to an embodiment of this application;

FIG. 2E is a diagram of intermediate-gradient calculation according to an embodiment of this application;

FIG. 3A and FIG. 3B are a diagram of an embodiment of a model training configuration method according to embodiments of this application;

FIG. 4 is a diagram of interaction between a first AI training node and a second AI training node according to an embodiment of this application;

FIG. 5A is a diagram of inserting at least one first additional module into a first submodel and inserting at least one second additional module into a second submodel according to an embodiment of this application;

FIG. 5B is another diagram of inserting at least one first additional module into a first submodel and inserting at least one second additional module into a second submodel according to an embodiment of this application;

FIG. 5C is still another diagram of inserting at least one first additional module into a first submodel and inserting at least one second additional module into a second submodel according to an embodiment of this application;

FIG. 6 is a diagram of delivering a hypernetwork by an AI task node according to an embodiment of this application;

FIG. 7 is a diagram of delivering a type, a structure parameter, and/or an index of at least one first additional module by an AI task node according to an embodiment of this application;

FIG. 8 is a diagram showing that a first additional module 1 and a second additional module 2 adapt to an outermost neural network layer in a first submodel according to an embodiment of this application;

FIG. 9 is a diagram of an effect of transmission overheads generated in a technical solution provided in an embodiment of this application compared with transmission overheads generated in a solution in which transmission of data, a parameter, and/or the like is performed by using an application layer and a physical layer;

FIG. 10 is a diagram of an effect of accuracy of image classification performed by using a first model obtained in a technical solution provided in an embodiment of this application compared with accuracy of image classification performed by using a model obtained in a solution in which transmission of data, a parameter, and/or the like is performed by using an application layer and a physical layer;

FIG. 11 is a diagram of redundancy transmission between a first AI training node and a second AI training node according to an embodiment of this application;

FIG. 12 is a diagram of a gain brought by redundancy transmission between a first AI training node and a second AI training node according to an embodiment of this application;

FIG. 13 is a diagram of another embodiment of a model training configuration method according to embodiments of this application;

FIG. 14 is a diagram of a first model including at least one first additional module or at least one second additional module according to an embodiment of this application;

FIG. 15 is a diagram of a first model obtained by removing at least one first additional module and at least one second additional module according to an embodiment of this application;

FIG. 16 is a diagram of a structure of a communication apparatus according to an embodiment of this application;

FIG. 17 is a diagram of another structure of a communication apparatus according to an embodiment of this application;

FIG. 18 is a diagram of still another structure of a communication apparatus according to an embodiment of this application;

FIG. 19 is a diagram of a structure of a terminal device according to an embodiment of this application; and

FIG. 20 is a diagram of a structure of a base station according to an embodiment of this application.

## DESCRIPTION OF EMBODIMENTS

Embodiments of this application provide a model training configuration method and a related apparatus, so that an AI task node configures at least one first additional module for a first AI training node, and this helps the first AI training node perform transmission of data, a parameter, and/or the like with a second AI training node via the at least one first additional module, to implement joint training between the first AI training node and the second AI training node.

Reference to "an embodiment", "some embodiments", or the like described in this application indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specially emphasized in another manner. The terms "include", "contain", "have", and their variants all mean "include but are not limited to", unless otherwise specially emphasized in another manner.

In the descriptions of this application, unless otherwise specified, "/" means "or". For example, A/B may represent A or B. "And/or" in this specification describes only an association relationship between associated objects, and represents that there may be three relationships. For example, A and/or B may represent the following three cases: Only A exists, both A and B exist, and only B exists. In addition, "at least one" means one or more, and "a plurality of" means two or more. "At least one of the following" or a similar expression thereof indicates any combination of the items, and includes a singular item or any combination of plural items. For example, at least one of a, b, or c may represent a, b, c, a and b, a and c, b and c, or a, b, and c. a, b, and c may be singular or plural.

The technical solutions in embodiments of this application may be applied to wireless communication systems such as 5th-generation (5th-generation, 5G) mobile communication, satellite communication, and short-distance communication. The wireless communication system mentioned in embodiments of this application includes but is not limited to a narrowband internet of things (Narrowband Internet of Things, NB-IoT) system, a long term evolution (Long Term Evolution, LTE) system, and three main application scenarios of the 5G communication system, namely, enhanced mobile broadband (enhanced mobile broadband, eMBB), ultra-reliable low-latency communication (ultra-reliable low-latency communication, URLLC), and massive machine-type communications (massive machine-type communications, mMTC); and with continuous development of communication technologies, further includes a subsequent evolved communication system like 6th-generation (6th-generation, 6G) mobile communication, and the like.

The communication system to which the technical solutions provided in this application are applied includes an AI task node and a first AI training node. Optionally, the communication system further includes a second AI training node. Optionally, further, the communication system further includes an AI model node.

In other words, the communication system to which the technical solutions provided in this application are applied includes the first AI training node and the second AI training node. Optionally, the communication system further includes the AI task node. Optionally, further, the communication system further includes the AI model node. It should be noted that the communication system may further include more AI training nodes. This is not specifically limited in this application. For example, the communication system further includes a third AI training node.

In this application, the AI model node is configured to initiate a model training request to the AI task node. The model training request is used by the AI model node to request to train a model corresponding to a type of a task requested by the AI model node. The AI task node is configured to split the model corresponding to the type of the task into a plurality of submodels, select a corresponding AI training node, and request the AI training node to train a corresponding submodel. The AI training node is configured to receive a request from the AI task node, and train the corresponding submodel.

In this application, optionally, the AI task node may be a network device or a server. This is not specifically limited in this application. The AI training node may be a network device or a terminal device. This is not specifically limited in this application. The AI model node may be a network device or a terminal device. This is not specifically limited in this application. Optionally, the network device may be a core network device or an access network device.

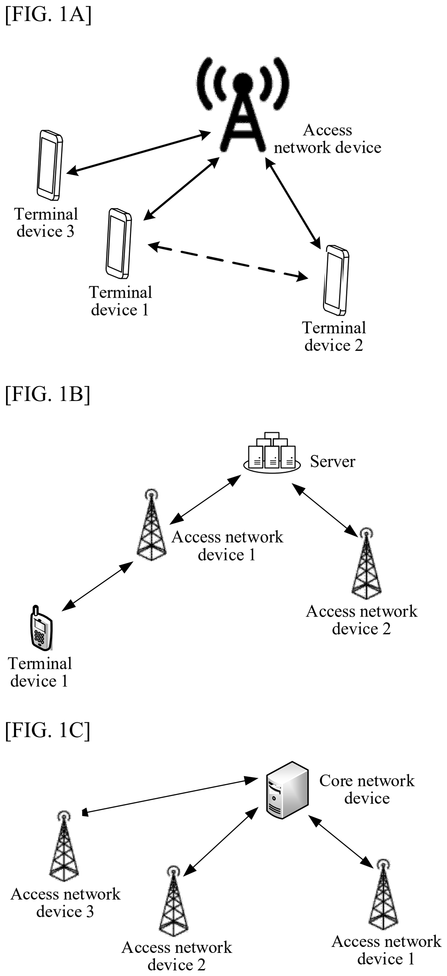

The following describes some possible application scenarios of this application with reference to FIG. 1A to FIG. 1D. This application is still applicable to another application scenario. This is not specifically limited in this application.

FIG. 1A is a diagram of a structure of a communication system according to an embodiment of this application. Refer to FIG. 1A. The communication system includes a network device, a terminal device 1, a terminal device 2, and a terminal device 3. An AI task node may be an access network device. A first AI training node is the terminal device 1. A second AI training node is the terminal device 2. An AI model node is the terminal device 3. The access network device and the terminal devices may perform the technical solutions in this application.

Device quantities and forms shown in FIG. 1A are used as an example, and do not constitute a limitation on this embodiment of this application. During actual application, the communication system in FIG. 1A may include more access network devices and more terminal devices.

FIG. 1B is a diagram of another structure of a communication system according to an embodiment of this application. Refer to FIG. 1B. The communication system includes a server, an access network device 1, an access network device 2, and a terminal device 1. An AI task node may be the server. A first AI training node is the access network device 1. A second AI training node is the terminal device 1. An AI model node is the access network device 2. The server, the access network devices, and the terminal device may perform the technical solutions in this application.

Device quantities and forms shown in FIG. 1B are used as an example, and do not constitute a limitation on this embodiment of this application. During actual application, the communication system in FIG. 1B may include more servers, more access network devices, and more terminal devices.

FIG. 1C is a diagram of still another structure of a communication system according to an embodiment of this application. Refer to FIG. 1C. The communication system includes a core network device, an access network device 1, an access network device 2, and an access network device 3. An AI task node may be the core network device. A first AI training node may be the access network device 1. A second AI training node may be the access network device 2. An AI model node may be the access network device 3. The core network device and the access network devices may perform the technical solutions in this application.

Device quantities and forms shown in FIG. 1C are used as an example, and do not constitute a limitation on this embodiment of this application. During actual application, the communication system in FIG. 1C may include more core network devices and more access network devices.

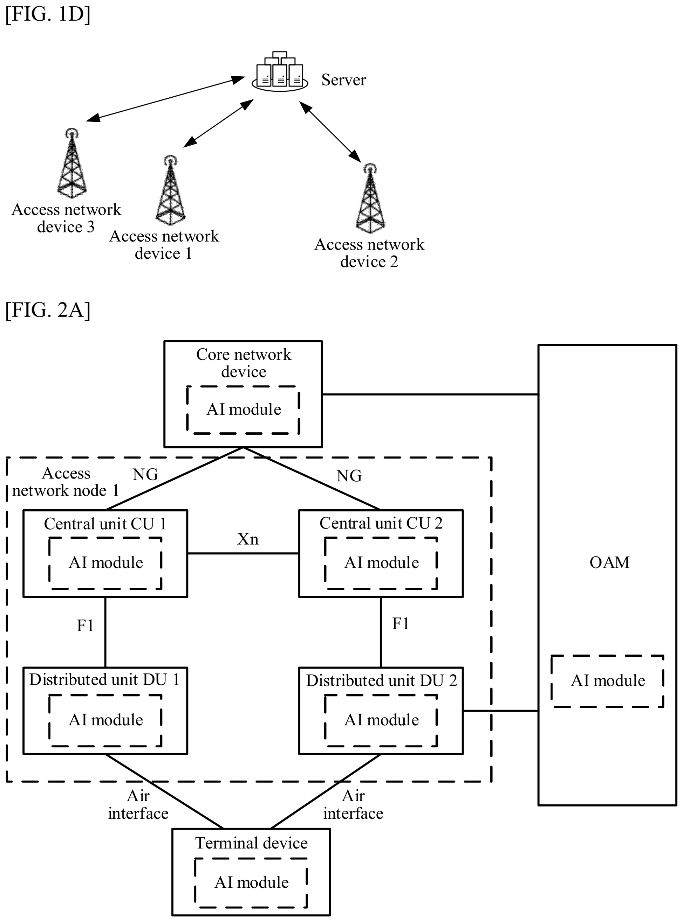

FIG. 1D is a diagram of yet another structure of a communication system according to an embodiment of this application. Refer to FIG. 1D, the communication system includes a server, an access network device 1, an access network device 2, and an access network device 3. An AI task node may be the server. A first AI training node may be the access network device 1. A second AI training node may be the access network device 2. An AI model node may be the access network device 3. The server and the access network devices may perform the technical solutions in this application.

Device quantities and forms shown in FIG. 1D are used as an example, and do not constitute a limitation on this embodiment of this application. During actual application, the communication system in FIG. 1D may include more servers and more access network devices.

The following describes the terminal device, the access network device, the core network device, and the server in this application.

The terminal device is also referred to as user equipment (user equipment, UE), a mobile station (mobile station, MS), a mobile terminal (mobile terminal, MT), customer premises equipment (customer premises equipment, CPE), or the like. The terminal device is a device that includes a wireless communication function (providing voice/data connectivity for a user), for example, a handheld device having a wireless connection function, a vehicle-mounted device, or a machine type communication (machine type communication, MTC) terminal. Currently, the terminal device may include a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. For example, the wireless terminal in the self driving may be an uncrewed aerial vehicle, a helicopter, or an airplane. For example, a wireless terminal in an internet of vehicles may be a vehicle-mounted device, an entire vehicle device, an in-vehicle module, a vehicle, or a ship. The wireless terminal in the industrial control may be a camera, a robot, a robotic arm, or the like. The wireless terminal in the smart home may be a television, an air conditioner, a sweeper, a speaker, a set-top box, or the like.

It should be noted that the terminal device may be a device or an apparatus with a chip, a device or an apparatus integrated with a circuit, or a chip, a module, or a control unit in the device or the apparatus shown above. This is not specifically limited in this application.

The access network device is a device that is deployed in a radio access network and that provides the wireless communication function for the terminal device. The access network device may also be referred to as a radio access network (radio access network, RAN) entity, an access node, a network node, a network device, a communication apparatus, or the like.

Specifically, the access network device may be an access network device of a cellular system related to the 3rd generation partnership project (3rd generation partnership project, 3GPP), for example, a 4th-generation (4th-generation, 4G) mobile communication system or a 5G mobile communication system. Alternatively, the access network device may be an access network device in an open radio access network (open RAN, O-RAN or ORAN) or a cloud radio access network (cloud radio access network, CRAN). Alternatively, the access network device may be an access network device in a communication system obtained by integrating the foregoing two or more communication systems.

The access network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a macro base station, a micro base station, a wireless relay node, a donor node, a radio controller in a CRAN scenario, a wireless backhaul node, a transmission point (transmission point, TP), or a transmission and receiving point (transmission and receiving point, TRP). Alternatively, the access network device may be an access network device in the 5G mobile communication system, for example, a next generation NodeB (next generation NodeB, gNB), a TRP, or a TP in a new radio (new radio, NR) system, or one or a group of (including a plurality of antenna panels) antenna panels of a base station in the 5G mobile communication system. Alternatively, the access network device may be a network node that constitutes a gNB or a transmission point, for example, a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a BBU. The RU may be included in a radio frequency device or a radio frequency unit, for example, a remote radio unit (remote radio unit, RRU), an active antenna unit (active antenna unit, AAU), or a remote radio head (remote radio head, RRH). Alternatively, the access network device may be a server, a wearable device, a vehicle, a vehicle-mounted device, or the like. For example, an access network device in a V2X technology may be a road side unit (road side unit, RSU).

It should be noted that, in different systems, the CU (or the CU-CP and the CU-UP), the DU, or the RU may have different names, but persons skilled in the art may understand meanings of the names. For example, in an ORAN system, the CU may also be referred to as an open central unit (open central unit, O-CU) or an open CU, the DU may also be referred to as an open distributed unit (open distributed unit, O-DU), the central unit-control plane (central unit-control plane, CU-CP) may also be referred to as an open central unit-control plane (open central unit-control plane, O-CU-CP) or an open CU-CP, the central unit-user plane (central unit-user plane, CU-UP) may also be referred to as an open central unit-user plane (open central unit-user plane, O-CU-UP) or an open CU-UP, and the RU may also be referred to as an open radio unit (open radio unit, O-RU). This is not specifically limited in this application. Any unit in the CU, the CU-CP, the CU-UP, the DU, and the RU in this application may be implemented by using a software module, a hardware module, or a combination of the software module and the hardware module.

Optionally, for the network elements in the ORAN system, each network element may implement a protocol layer function shown in Table 1 below.

Table 1

| ORAN network element | Protocol layer function |
|---|---|
| O-CU-CP | Radio resource control (radio resource control, RRC) and packet data convergence protocol control plane (packet data convergence protocol control plane, PDCP-C) |
| O-CU-UP | Service data adaptation protocol (service data adaptation protocol, SDAP) and packet data convergence protocol user plane (packet data convergence protocol user plane, PDCP-U) |
| O-DU | Radio link control (radio link control, RLC), medium access control (medium access control, MAC), and higher physical layer (PHY-high) |
| O-RU | Lower physical layer (PHY-low) |

It should be noted that Table 1 above is merely an example. During actual application, a protocol layer function supported by each network element is not limited. For example, each network element may support more protocol layer functions, or the protocol layer function supported by each network element is specifically configured based on an actual case. This is not specifically limited in this application.

The following describes architectures of the CU and the DU of the access network device. The access network device includes at least one CU and at least one DU. Optionally, the access network device further includes at least one RU.

The following provides descriptions by using an example in which the access network device includes one CU and one DU. The CU has a part of functions of a core network, and the CU may include the CU-CP and the CU-UP. The CU and the DU may be configured based on protocol layer functions of a wireless network that are implemented by the CU and the DU. For example, the CU is configured to implement functions of a packet data convergence protocol (packet data convergence protocol, PDCP) layer and a protocol layer (for example, an RRC layer and/or an SDAP layer) above the PDCP layer, and the DU is configured to implement a function of a protocol layer (for example, an RLC layer, a MAC layer, and/or a physical (physical, PHY) layer) below the PDCP layer. For another example, the CU is configured to implement a function of a protocol layer (for example, an RRC layer and/or an SDAP layer) above a PDCP layer, and the DU is configured to implement functions of the PDCP layer and a protocol layer (for example, an RLC layer, a MAC layer, and/or a PHY layer) below the PDCP layer.

When the CU includes the CU-CP and the CU-UP, the CU-CP is configured to implement a control plane function of the CU, and the CU-UP is configured to implement a user plane function of the CU. For example, when the CU is configured to implement functions of the PDCP layer, the RRC layer, and the SDAP layer, the CU-CP is configured to implement the function of the RRC layer and a control plane function of the PDCP layer, and the CU-UP is configured to implement the function of the SDAP layer and a user plane function of the PDCP layer.

The CU-CP may interact with a network element that is in the core network and that is configured to implement a control plane function. The network element that is in the core network and that is configured to implement the control plane function may be an access and mobility function network element, for example, an access and mobility management function (access and mobility management function, AMF) in the 5G mobile communication system. The access and mobility function network element is configured to be responsible for mobility management in a mobile network, for example, location update of the terminal device, network registration of the terminal device, and handover of the terminal device. The CU-UP may interact with a network element that is in the core network and that is configured to implement a user plane function. The network element that is in the core network and that is configured to implement the user plane function, for example, a user plane function (user plane function, UPF) in the 5G mobile communication system, is configured to be responsible for forwarding and receiving data in the terminal device.

The foregoing configurations of the CU and the DU are merely examples. Alternatively, functions of the CU and the DU may be configured based on a requirement. For example, the CU or the DU may be configured to have functions of more protocol layers, or the CU or the DU may be configured to have a part of processing functions of a protocol layer. For example, a part of functions of the RLC layer and a function of a protocol layer above the RLC layer are set on the CU, and a remaining function of the RLC layer and a function of a protocol layer below the RLC layer are set on the DU. For another example, functions of the CU or the DU may be obtained through division based on a service type or another system requirement. For example, division is performed based on latency. Functions whose processing time needs to satisfy a low-latency requirement are set on the DU, and functions whose processing time does not need to satisfy the latency requirement are set on the CU.

The DU and the RU may cooperate to jointly implement a function of the PHY layer. One DU may be connected to one or more RUs. Functions of the DU and the RU may be configured into a plurality of manners based on a design. For example, the DU is configured to implement a baseband function, and the RU is configured to implement an intermediate radio frequency function. For another example, the DU is configured to implement a higher-layer function of the PHY layer, and the RU is configured to implement a lower-layer function of the PHY layer or implement the lower-layer function and a radio frequency function. The higher-layer function of the physical layer may include a part of functions of the physical layer, and the part of the functions are closer to the MAC layer. The lower-layer function of the physical layer may include the other part of the functions of the physical layer, and the other part of the functions are closer to an intermediate radio frequency side.

It should be noted that the access network device may be the foregoing device or apparatus, or may be a component (for example, a chip), a module, or a unit in the foregoing device or apparatus. This is not specifically limited in this application.

The core network device is responsible for access control, registration management, service management, mobility management, and the like for the terminal device to access a network. For example, the core network device is the access and mobility management function (access and mobility management function, AMF).

The server is configured to provide a service function for a specific application. For example, the server may be a server of the specific application.

In the communication system provided in this application, an AI network element may be introduced to implement a part or all of AI-related operations. The AI network element may also be referred to as an AI node, an AI device, an AI entity, an AI module, an AI model, an AI unit, or the like. The AI network element may be built in a network element in a communication system. For example, the AI network element may be an AI module built in the access network device, the core network device, a cloud server, or an operation, administration, and maintenance (operation, administration, and maintenance, OAM), to implement an AI-related function. The OAM may be used as an operation, administration, and maintenance of the core network device and/or an operation, administration, and maintenance of the access network device. Alternatively, the AI network element may be an independently disposed network element in the communication system. Optionally, the terminal or the chip built in the terminal may alternatively include the AI entity, configured to implement the AI-related function. With reference to FIG. 2A, the following describes another communication system provided in an embodiment of this application.

FIG. 2A is a diagram of yet another structure of a communication system according to an embodiment of this application. As shown in FIG. 2A, network elements in the communication system are connected to each other through an interface (for example, an NG interface or an Xn interface) or an air interface. One or more AI modules (for clarity, FIG. 2A shows only one AI module) are disposed in these network element nodes (for example, one or more devices in a core network device, an access network node (a RAN node), a terminal, or an OAM). The access network node may be used as an independent RAN node, or may include a plurality of RAN nodes, for example, include a CU and a DU. One or more AI modules may also be disposed in the CU and/or the DU. Optionally, the CU may be further split into a CU-CP and a CU-UP. One or more AI models are disposed in the CU-CP and/or the CU-UP.

The AI module is configured to implement a corresponding AI function. AI modules deployed in different network elements may be the same or different. A model of the AI module is configured based on different parameters, and the AI module can implement different functions. The model of the AI module may be configured based on one or more of the following parameters: a structure parameter (for example, at least one of a quantity of neural network layers, a neural network width, a connection relationship between layers, a weighted value of a neuron, an activation function of the neuron, or a bias in the activation function), an input parameter (for example, a type of the input parameter and/or a dimension of the input parameter), or an output parameter (for example, a type of the output parameter and/or a dimension of the output parameter). The bias in the activation function may also be referred to as a bias of a neural network.

One AI module may have one or more models. One output may be obtained through inference by using one model, where the output includes one or more parameters. Learning processes, training processes, or inference processes of different models may be deployed on different nodes or devices, or may be deployed on a same node or device.

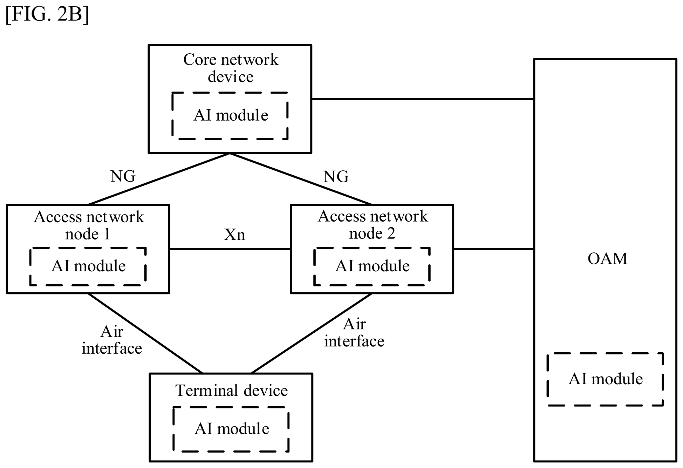

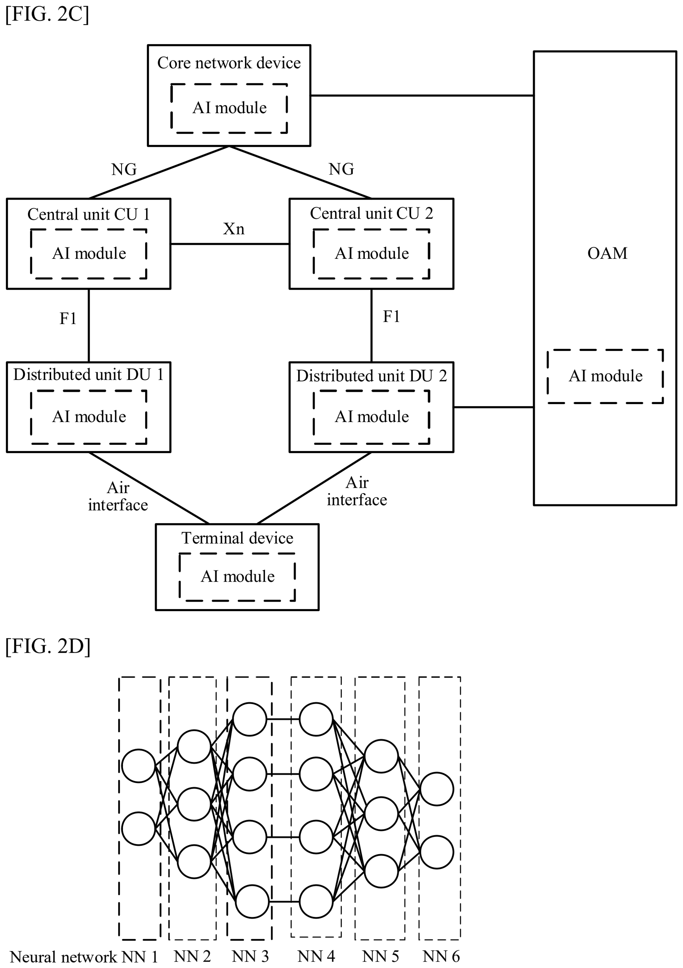

It should be noted that the access network node shown in FIG. 2A above may be used as a whole, or the access network node shown in FIG. 2A above uses an architecture in which the CU and the DU are separated. FIG. 2B is a diagram of a communication system in which an access network node is used as a whole and the access network node is connected to a terminal device. FIG. 2C is a diagram of a communication system in which an access network node uses an architecture in which a CU and a DU are separated.

In this application, optionally, the AI task node, the first AI training node, the second AI training node, and the AI model node may all be the foregoing AI network elements.

A combination of AI and the network will be an important direction of future research. An AI technology is applied to a communication device. For example, a first communication device and a second communication device are two AI training nodes. A channel between the first communication device and the second communication device is unknown. The first communication device may map data to an air interface resource for transmission, that is, convert the data into a signal to be sent on an air interface, so that reverse transmission of the data is implemented, to implement joint training between the first communication device and the second communication device. The first communication device and the second communication device do not need to perform, to generate a signal for sending, channel coding and symbol modulation by using a physical layer. It can be learned that how the first communication device maps the data to the air interface resource for transmission, that is, how the first communication device converts the data into the signal to be sent on the air interface, is a problem worth consideration. For details, refer to related descriptions in the following embodiments.

The technical solutions provided in this application are applicable to a communication system for distributed learning. The distributed learning is a learning method for implementing joint training. The distributed learning includes split learning (split learning) and federated learning (federated learning). In the technical solutions in this application, joint training is mainly implemented in a split learning manner. Specifically, in this application, the AI task node may split a first model requested by the AI model node into a first submodel and a second submodel. Then, the AI task node requests the first AI training node to train the first submodel, and requests the second AI training node to train the second submodel. Data and/or parameter transmission may be implemented between the first AI training node and the second AI training node by using the technical solutions in this application, to implement joint training between the first AI training node and the second AI training node.

The following describes some technical terms in this application.

1. Neural network: The neural network may be composed of neurons. The neuron may be an operation unit that uses $x_s$ and an intercept of 1 as inputs. An output of the operation unit may be:

$$h_{W,b}\left(x\right) = f\left(W^{T}x\right) = f(\sum\nolimits_{s=1}^{n} W_s x_s + b) \quad (1)$$

s=1, 2, ..., and n, n is a natural number greater than 1, and $W_s$ is a weight of $x_s$. It should be noted that, optionally, the weight of $x_s$ may alternatively be calculated by adding a weight gradient to a weight used by the neuron last time. b is a bias of the neuron. f is an activation function (activation function) of the neuron, and is for introducing a non-linear characteristic into the neural network, to convert an input signal in the neuron into an output signal. That is, a parameter is input into one neuron, and the neuron may output a corresponding parameter. The neural network is a network formed by connecting a plurality of single neurons above. That is, an output of one neuron may be an input of another neuron.

The neural network may have a plurality of layers of neurons. The following uses a deep neural network (deep neural network, DNN) as an example for description. The deep neural network is a neural network with many hidden layers. A multi-layer neural network and the deep neural network are essentially the same. The DNN is divided based on locations of different layers, and a neural network inside the DNN may be divided into three types: an input layer, a hidden layer, and an output layer. Generally, a $1^{st}$ layer is the input layer, a last layer is the output layer, and all intermediate layers are hidden layers. Layers are fully connected. In other words, any neuron at an $a^{th}$ layer is necessarily connected to any neuron at an $(a+1)^{th}$ layer. In the deep neural network, more hidden layers make the network more capable of describing a complex case in the real world. Theoretically, a model with more model parameters has higher complexity and a larger "capacity". It indicates that the model can complete a more complex learning task. With reference to FIG. 2D, the following describes a plurality of neural network layers included in a neural network. The neural network shown in FIG. 2D includes six neural network layers, which are specifically a neural network layer (neural network, NN 1) to an NN 6. The NN 1 includes two output dimensions, the NN 2 includes three output dimensions, the NN 3 includes four output dimensions, the NN 4 includes four output dimensions, the NN 5 includes three output dimensions, and the NN 6 includes two output dimensions. It should be noted that FIG. 2D above is merely for ease of demonstration, and shows only output dimensions included at each neural network layer. Actually, the neural network layer includes the output dimensions of the neural network layer and a connection structure between the neural network layer and a previous neural network layer. For example, the NN 2 includes the three output dimensions of the NN 2 and a connection structure between the three output dimensions of the NN 2 and the two output dimensions of the NN 1. Other neural network layers are similar. Details are not described one by one herein.

2. Intermediate gradient: is one item or a plurality of items in a gradient expression of a neural network parameter, or a product of the plurality of items. When intermediate gradients are the plurality of items in the gradient expression of the neural network parameter, the plurality of items are separately transmitted back to a previous AI training node.

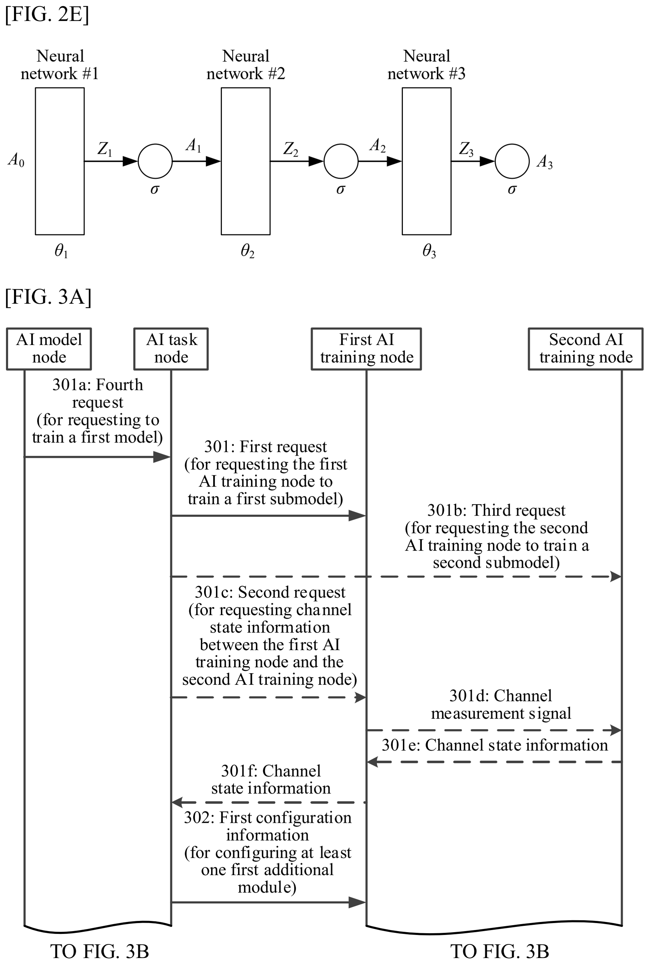

For example, a communication system shown in FIG. 2E includes a neural network #1, a neural network #2, and a neural network #3, and parameters corresponding to the neural networks in the communication system are $\theta_1$, $\theta_2$, and $\theta_3$. $A_0$, $A_1$, and $A_2$ are respectively inputs of the neural network #1, the neural network #2, and the neural network #3, and $\sigma$ is one or more functions for data processing, where $Z_i = \theta_i g A_{i-1}$, $A_{i-1} = \sigma g(Z_{i-1})$ and $i$ may be 1, 2, or 3.

Gradients of the parameter of the neural network #3, the parameter of the neural network #2, and the parameter of the neural network #1 are respectively:

$$\frac{\partial l}{\partial \theta_3} = \frac{\partial l}{\partial A_3} \frac{\partial A_3}{\partial Z_3} \frac{\partial Z_3}{\partial \theta_3} \qquad (2)$$

$$\frac{\partial l}{\partial \theta_2} = \frac{\partial l}{\partial A_3} \frac{\partial A_3}{\partial Z_3} \frac{\partial Z_3}{\partial A_2} \frac{\partial A_2}{\partial Z_2} \frac{\partial Z_2}{\partial \theta_2} \qquad (3)$$

$$\frac{\partial l}{\partial \theta_1} = \frac{\partial l}{\partial A_3} \frac{\partial A_3}{\partial Z_3} \frac{\partial Z_3}{\partial A_2} \frac{\partial A_2}{\partial Z_2} \frac{\partial Z_2}{\partial A_1} \frac{\partial A_1}{\partial Z_1} \frac{\partial Z_1}{\partial \theta_1} \qquad (4)$$

$l$ is a loss function. In this way, an intermediate gradient of the parameter of the neural network #3 is one item or a plurality of items in the formula (2), or a product of the plurality of items. For example, the intermediate gradient of the parameter of the neural network #3 is $\frac{\partial l}{\partial A_3} \frac{\partial A_3}{\partial Z_3}$. For another example, intermediate gradients of the parameter of the neural network #3 are $\frac{\partial l}{\partial A_3}$ and $\frac{\partial A_3}{\partial Z_3}$. An intermediate gradient of the parameter of the neural network #2 is one item or a plurality of items in the formula (3), or a product of the plurality of items. For example, the intermediate gradient of the parameter of the neural network #2 is $\frac{\partial l}{\partial A_3} \frac{\partial A_3}{\partial Z_3} \frac{\partial Z_3}{\partial A_2}$. For another example, the intermediate gradient of the parameter of the neural network #2 is $\frac{\partial l}{\partial A_3} \frac{\partial A_3}{\partial Z_3} \frac{\partial Z_3}{\partial A_2} \frac{\partial A_2}{\partial Z_2}$. For still another example, the intermediate gradient of the parameter of the neural network #2 is $\frac{\partial l}{\partial A_3} \frac{\partial A_3}{\partial Z_3}$. An intermediate gradient of the parameter of the neural network #1 is one item or a plurality of items in the formula (4), or a product of the plurality of items. For example, the intermediate gradient of the parameter of the neural network #1 is $\dfrac{\partial l}{\partial A_3}\dfrac{\partial A_3}{\partial Z_3}\dfrac{\partial Z_3}{\partial A_2}\dfrac{\partial A_2}{\partial Z_2}\dfrac{\partial Z_2}{\partial A_1}$ . For another example, the intermediate gradient of the parameter of the neural network #1 is $\dfrac{\partial l}{\partial A_3}\dfrac{\partial A_3}{\partial Z_3}\dfrac{\partial Z_3}{\partial A_2}\dfrac{\partial A_2}{\partial Z_2}\dfrac{\partial Z_2}{\partial A_1}\dfrac{\partial A_1}{\partial Z_1}$ .

3. Loss function: an operation function for measuring a degree of a difference between a predicted value f(x) and a real value Y of a model. The loss function is a non-negative real-valued function, and is usually represented by using L(Y, f(x)). A smaller loss function indicates better robustness of the model.

4. Hypernetwork: indicates a small-scale network for generating large-scale network parameters. In this process, a function of a main network is the same as that of any neural network, that is, mapping an input sample to a corresponding target value. A function of the hypernetwork is receiving a series of values including parameter structure information of the main network as an input and then generating a parameter of a specific layer of the main network.

5. Hyperparameter: a parameter for model estimation, for example, a learning rate of the deep neural network.

In this application, the first additional module may also be referred to as a first additional neural network layer, a first additional neural network, a first additional algorithm, a first additional transformation, first additional matching, first additional adaptation, or a first additional equalization. A name of the first additional module is not specifically limited in this application. A second additional module is also similar. For example, the second additional module may also be referred to as a second additional neural network layer, a second additional neural network, a second additional algorithm, a second additional transformation, second additional matching, second additional adaptation, or a second additional equalization. A name of the second additional module is not specifically limited in this application.

The following describes the technical solutions in this application with reference to specific embodiments.

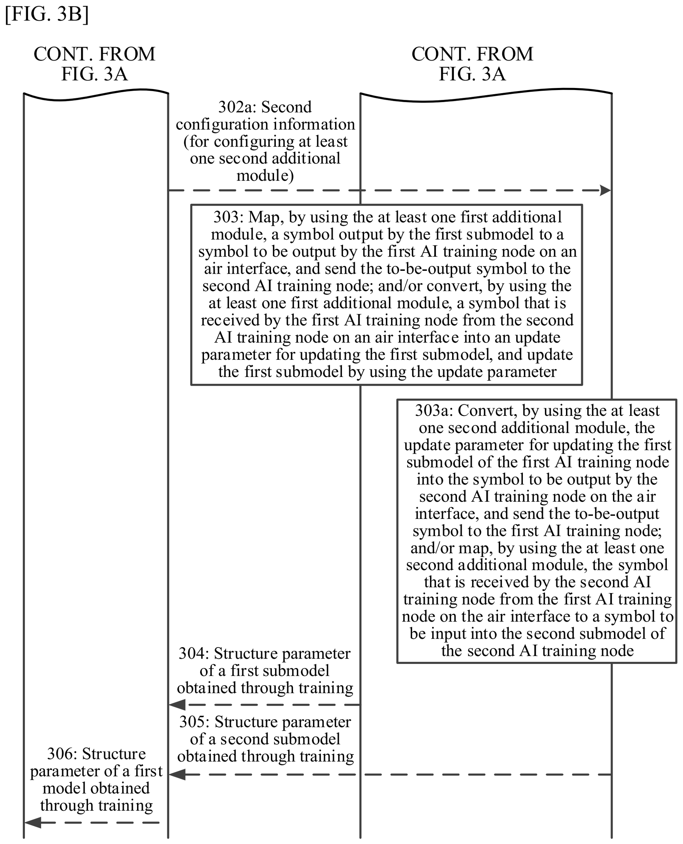

FIG. 3A and FIG. 3B are a diagram of an embodiment of a model training configuration method according to embodiments of this application. Refer to FIG. 3A and FIG. 3B. The method includes the following steps.

301: An AI task node sends a first request to a first AI training node, where the first request is for requesting the first AI training node to train a first submodel. Accordingly, the first AI training node receives the first request from the AI task node.

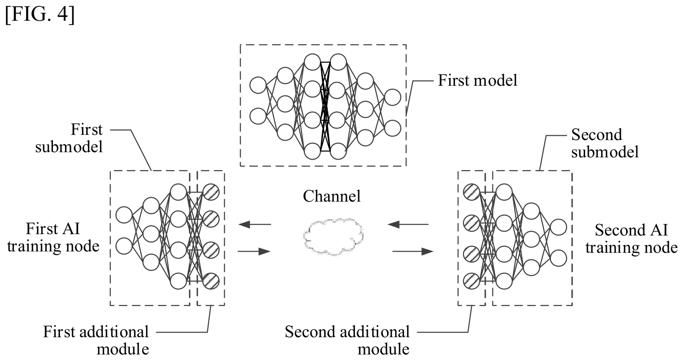

The first submodel is one of a plurality of submodels obtained by splitting a first model. The first model is a model that an AI model node requests to train. For example, as shown in FIG. 4, the first model is the model that the AI model node requests to train. The AI task node splits the first model into the first submodel and a second submodel. Then, the AI task node sends the first request to the first AI training node, to request the first AI training node to train the first submodel. As shown in FIG. 4, the first model is a neural network, the first submodel is a first-part neural network obtained by splitting the neural network, and the second submodel is a second-part neural network obtained by splitting the neural network. It should be noted that FIG. 4 is merely an example. During actual application, the AI task node may alternatively split the first model into more submodels based on an actual case. This is not specifically limited in this application.

Optionally, the first request includes at least one of the following: a structure of the first submodel, a first hyperparameter, a first loss function, a first training stopping condition, a number of the first submodel in the plurality of submodels, or a dataset.

For related functions of the first hyperparameter and the first loss function, refer to the descriptions in the foregoing technical terms.

For example, the first submodel is a neural network. The structure of the first submodel includes a quantity of layers of the neural network, a neural network type (for example, a convolutional neural network (convolutional neural network, CNN) or a recurrent neural network (recurrent neural network, RNN)) used at each layer, and a quantity of neurons at each neural network layer.

The first training stopping condition is a condition for stopping training the first submodel by the first AI training node. For example, a quantity of times of training is greater than a preset threshold; training time of the first submodel exceeds a preset threshold; or test performance corresponding to the first model is greater than a preset threshold. The test performance corresponding to the first model is task execution performance obtained by the AI model node by executing, by using the first model, a task requested by the AI model node.

The AI task node may sort and number the plurality of submodels. For example, in the plurality of submodels, a submodel including a neural network layer with a larger layer sequence number has a larger sorting number, and a submodel including a neural network layer with a smaller layer sequence number has a smaller sorting number. Alternatively, in the plurality of submodels, a submodel including a neural network layer with a smaller layer sequence number has a smaller sorting number, and a submodel including a neural network layer with a larger layer sequence number has a larger sorting number. Alternatively, in the plurality of submodels, a submodel with earlier execution time has a smaller sorting number, and a submodel with later execution time has a larger sorting number. Alternatively, in the plurality of submodels, a submodel with later execution time has a smaller sorting number, and a submodel with earlier execution time has a larger sorting number. Execution time of a submodel is time that is specified by the AI task node and at which a device in which the submodel is located receives corresponding data and/or a corresponding parameter and trains the submodel. Therefore, the number of the first submodel in the plurality of submodels is a number that is of the first submodel and that is obtained by sorting and numbering the plurality of submodels in ascending order or descending order of layer sequence numbers of neural network layers included in the submodels. Alternatively, the number of the first submodel in the plurality of submodels is a number that is of the first submodel and that is obtained by sorting and numbering the plurality of submodels in chronological order or reverse chronological order of execution time of the submodels. For example, as shown in FIG. 4, the AI task node splits the first model into the first submodel and the second submodel. The first submodel includes a neural network layer 1 and a neural network layer 2, and the second submodel includes a neural network layer 3 and a neural network layer 4. Therefore, it can be learned that, if the AI task node sorts and numbers the first submodel and the second submodel in ascending order of the layer sequence numbers of the neural network layers included in the submodels, the number of the first submodel is 1, and a number of the second submodel is 2.

The dataset is used as input data of the first submodel. Specifically, the first AI training node may input the dataset into the first submodel, to obtain output data of the first submodel.

Optionally, the embodiment shown in FIG. 3A and FIG. 3B further includes step 301a. Step 301a may be performed before step 301.

301a: The AI model node sends a fourth request to the AI task node, where the fourth request is for requesting to train the first model. Accordingly, the AI task node receives the fourth request from the AI model node.

Optionally, the fourth request includes at least one of the following: a task type, a structure of the first model, training complexity, or a time limitation requirement.

The task type is a type of the task requested by the AI model node, and the task type corresponds to the first model. For example, the task type is an image classification task, and the first model is for supporting the AI model node in executing the image classification task.

For example, the first model is a neural network. The structure of the first model includes a quantity of layers of the neural network, a neural network type (for example, the CNN or the RNN) used at each layer, and a quantity of neurons at each neural network layer.

The training complexity includes calculation complexity and/or storage complexity. The calculation complexity indicates complexity of training the first model. The storage complexity indicates complexity of storing a parameter of a first model obtained through training. A larger quantity of parameters of the first model indicates higher storage complexity.

The time limitation requirement indicates training time of the first model, that is, indicates that training of the first model is completed within the time indicated by the time limitation requirement.

302: The AI task node sends first configuration information to the first AI training node, where the first configuration information is for configuring at least one first additional module. Accordingly, the first AI training node receives the first configuration information from the first AI training node.

The at least one first additional module is configured to map a symbol output by the first submodel to a symbol to be output by the first AI training node on an air interface, and/or the at least one first additional module is configured to convert a symbol received by the first AI training node on an air interface into an update parameter for updating the first submodel. The symbol output by the first submodel may be obtained by inputting the dataset into the first submodel by the first AI training node; or the symbol output by the first submodel may be a symbol obtained by converting data output by the first submodel. The data output by the first submodel is obtained by inputting the dataset into the first submodel by the first AI training node.

Optionally, the update parameter includes an intermediate gradient or a weight parameter for updating the first submodel. This specification mainly uses the intermediate gradient as an example for description.

Optionally, each of the at least one first additional module is a neural network or a signal processing module. The signal processing module may be a software module, a hardware module, or a module combining software and hardware. The signal processing module supports a corresponding signal processing algorithm. The following mainly provides descriptions by using an example in which each first additional module is the neural network.

For example, as shown in FIG. 4, the at least one first additional module includes one first additional module. The first AI training node inputs the dataset into the first submodel, to obtain the symbol output by the first submodel. Alternatively, the first AI training node inputs the dataset into the first submodel, to obtain the data output by the first submodel; and then converts the data output by the first submodel into the symbol output by the first submodel. That is, the first submodel may directly output the symbol. Alternatively, the first submodel may output the data, and then the first AI training node converts the data into the symbol. Then, the first AI training node maps, by using the first additional module, the symbol output by the first submodel to the symbol to be output by the first AI training node on the air interface. The first AI training node converts, by using the first additional module, the symbol received on the air interface into the intermediate gradient for updating the first submodel. Then, the first AI training node updates the first submodel by using the intermediate gradient. It should be noted that the first additional module shown in FIG. 4 includes four output dimensions, and a connection structure between the four output dimensions and the first submodel may be understood as a structure of the first additional module. The example shown in FIG. 4 is merely for ease of illustration. Actually, the first additional module includes the connection structure between the four output dimensions of the first additional module and the first submodel, and the four output dimensions. It should be noted that the first additional module shown in FIG. 4 includes one neural network layer. The first additional module shown in FIG. 4 above is merely an example. During actual application, in this application, each first additional module includes one or more neural network layers. This is not specifically limited in this application.

It should be noted that a process in which the first AI training node maps, by using the at least one additional module, the symbol output by the first submodel to the symbol to be output by the first AI training node on the air interface is similar to the process in which the first communication apparatus maps the first intermediate gradient to the air interface resource to generate the first gradient signal in the patent document No. 202110412895.X. For details, refer to the related descriptions in the patent document. A process in which the first AI training node converts, by using the at least one first additional module, the symbol received on the air interface into the update parameter for updating the first submodel is similar to the process in which the second communication apparatus determines the second intermediate gradient based on the second gradient signal in the patent document No. 202110412895.X. For details, refer to the related descriptions in the patent document.

Optionally, the first configuration information includes at least one of the following: an index, a type, or a structure parameter of the at least one first additional module, first indication information, second indication information, third indication information, fourth indication information, or fifth indication information.

Specifically, the first configuration information includes an index, a type, or a structure parameter of each of the at least one first additional module. For example, each first additional module is a neural network, and the type of the first additional module includes a quantity of layers included in the neural network, a quantity of neurons included at each neural network layer, and a type of the neural network layer. The structure parameter of the first additional module includes a parameter of the neuron at the neural network layer in the neural network.

It should be noted that the foregoing shows an implementation in which the first configuration information includes a specific configuration of the at least one first additional module. Optionally, the first configuration information may alternatively include an executable file. The executable file is used by the first AI training node to implement a function of the at least one first additional module. That is, the first configuration information does not explicitly indicate the specific configuration of the at least one first additional module, but is for configuring the executable file. The first AI training node executes the executable file to implement the function of the at least one first additional module, to avoid disclosing the specific configuration of the at least one first additional module.

The first indication information indicates whether the at least one first additional module is to participate in training of the first submodel, in other words, whether the first AI training node trains the at least one first additional module as a part of model training when training the first submodel. A length of the first indication information may be one bit, two bits, three bits, or the like. This is not specifically limited in this application. For example, the length of the first indication information is one bit. When a value of the first indication information is 0, it indicates that the at least one first additional module is not to participate in training of the first submodel; or when a value of the first indication information is 1, it indicates that the at least one first additional module is to participate in training of the first submodel. Alternatively, when a value of the first indication information is 0, it indicates that the at least one first additional module is to participate in training of the first submodel; or when a value of the first indication information is 1, it indicates that the at least one first additional module is not to participate in training of the first submodel. For example, as shown in FIG. 4, if the first indication information indicates that the at least one first additional module is to participate in training of the first submodel, the first AI training node may perform model training by using the first submodel and the first additional module as a whole.

The second indication information indicates whether the at least one first additional module is to be reported as a part of the first submodel to the AI task node, in other words, whether the first AI training node reports, when reporting a first submodel obtained through training, the at least one first additional module as the part of the first submodel obtained through training to the AI task node. A length of the second indication information may be one bit, two bits, three bits, or the like. This is not specifically limited in this application. For example, the length of the second indication information is one bit. When a value of the second indication information is 0, it indicates that the at least one first additional module is not to be reported as the part of the first submodel to the AI task node; or when a value of the second indication information is 1, it indicates that the at least one first additional module is to be reported as the part of the first submodel to the AI task node. Alternatively, when a value of the second indication information is 0, it indicates that the at least one first additional module is to be reported as the part of the first submodel to the AI task node; or when a value of the second indication information is 1, it indicates that the at least one first additional module is not to be reported as the part of the first submodel to the AI task node. For example, as shown in FIG. 4, if the second indication information indicates that the at least one first additional module is to be reported as the part of the first submodel to the AI task node, the first AI training node may report, to the AI task node, the first submodel obtained through training and the first additional module as a whole.

The third indication information indicates a deployment manner of each of the at least one first additional module, and the deployment manner includes serial deployment or parallel deployment. A length of the third indication information may be one bit, two bits, three bits, or the like. This is not specifically limited in this application. For example, the length of the third indication information is one bit. When a value of the third indication information is 0, it indicates that the deployment manner of each of the at least one first additional module is the serial deployment; or when a value of the third indication information is 1, it indicates that the deployment manner of each of the at least one first additional module is the parallel deployment. Alternatively, when a value of the third indication information is 0, it indicates that the deployment manner of each of the at least one first additional module is the parallel deployment; or when a value of the third indication information is 1, it indicates that the deployment manner of each of the at least one first additional module is the serial deployment.

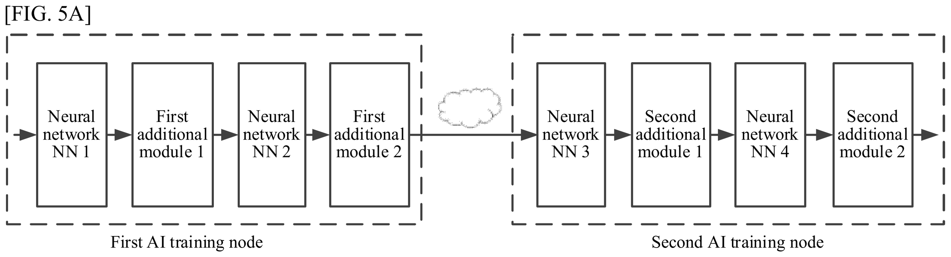

For example, as shown in FIG. 5A, the at least one first additional module includes a first additional module 1 and a first additional module 2. The third indication information indicates that a deployment manner of the first additional module 1 is the serial deployment and that a deployment manner of the first additional module 2 is the serial deployment. The first additional module 1 is connected in series between an NN 1 in the first submodel and an NN 2 in the first submodel, and the first additional module 2 is connected in series to the NN 2 in the first submodel. For details, refer to FIG. 5A. In this implementation, an input dimension of the first additional module 1 is equal to an output dimension of the NN 1, and an output dimension of the first additional module 1 is equal to an input dimension of the NN 2. An input dimension of the first additional module 2 is equal to an output dimension of the NN 2.

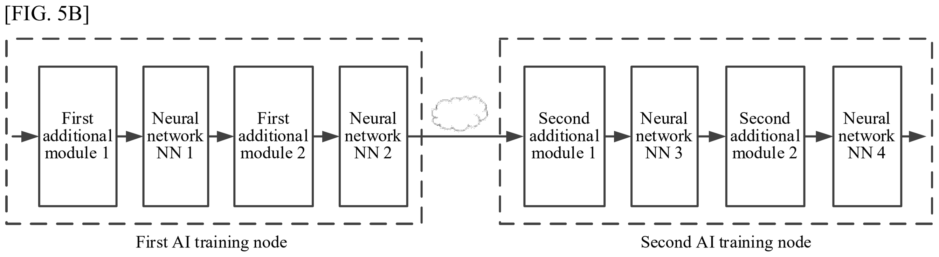

For another example, as shown in FIG. 5B, the at least one first additional module includes a first additional module 1 and a first additional module 2. The third indication information indicates that a deployment manner of the first additional module 1 is the serial deployment and that a deployment manner of the first additional module 2 is the serial deployment. The first additional module 1 is connected in series to an NN 1 in the first submodel, and the first additional module 2 is connected in series between the NN 1 in the first submodel and an NN 2 in the first submodel. For details, refer to FIG. 5B. In this implementation, an output dimension of the first additional module 1 is equal to an input dimension of the NN 1. An input dimension of the first additional module 2 is equal to an output dimension of the NN 1, and an output dimension of the first additional module 2 is equal to an input dimension of the NN 2.

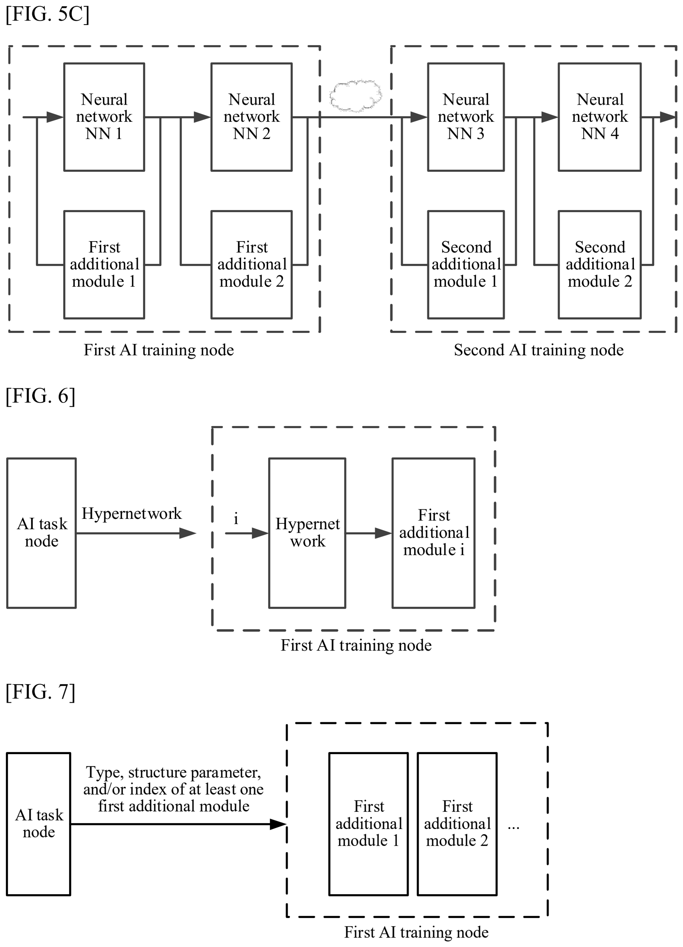

For another example, as shown in FIG. 5C, the at least one first additional module includes a first additional module 1 and a first additional module 2. The third indication information indicates that deployment manners corresponding to the first additional module 1 and the first additional module 2 are both the parallel deployment. Therefore, it can be learned that the first additional module 1 is connected in parallel to an NN 1 in the first submodel, and the first additional module 2 is connected in parallel to an NN 2 in the first submodel. For details, refer to FIG. 5C. In this implementation, an input dimension of the first additional module 1 is equal to an input dimension of the NN 1, and an output dimension of the first additional module 1 is equal to an output dimension of the NN 1. An input dimension of the first additional module 2 is equal to an input dimension of the NN 2, and an output dimension of the first additional module 2 is equal to an output dimension of the NN 2.

The fourth indication information indicates whether to indicate the type or the structure parameter of the at least one first additional module to the first AI training node. A length of the fourth indication information may be one bit, two bits, three bits, or the like. This is not specifically limited in this application. For example, the length of the fourth indication information is one bit. When a value of the fourth indication information is 0, it indicates not to indicate the type or the structure parameter of the at least one first additional module to the first AI training node; or when a value of the fourth indication information is 1, it indicates to indicate the type or the structure parameter of the at least one first additional module to the first AI training node. Alternatively, when a value of the fourth indication information is 0, it indicates to indicate the type or the structure parameter of the at least one first additional module to the first AI training node; or when a value of the fourth indication information is 1, it indicates not to indicate the type or the structure parameter of the at least one first additional module to the first AI training node.

In a possible implementation, the first configuration information further includes an index of a hypernetwork. The hypernetwork is for determining the at least one first additional module.

In this implementation, the fourth indication information indicates not to indicate the type or the structure parameter of the at least one first additional module to the first AI training node. For example, as shown in FIG. 6, the AI task node sends the index of the hypernetwork to the first AI training node. The first AI training node may input a sequence number i of a first additional module i as an input parameter of the hypernetwork into the hypernetwork, to obtain the first additional module i. i is greater than or equal to 1 and less than or equal to a quantity of first additional modules included in the at least one first additional module.

It should be noted that, optionally, if types of the first additional modules in the at least one first additional module are different, the first AI training node should further input a type of the first additional module i as an input parameter of the hypernetwork into the hypernetwork, to obtain the first additional module i. That is, input parameters of the hypernetwork include the sequence number i and the type of the first additional module i.

In another possible implementation, the first configuration information includes the index of the at least one first additional module, and/or the type or the structure parameter of the at least one first additional module.

In this implementation, the fourth indication information indicates to indicate the type or the structure parameter of the at least one first additional module to the first AI training node. The AI task node may indicate the index of the at least one first additional module, and/or the AI task node delivers the type or the structure parameter of the at least one first additional module to the first AI training node in an agreed format. For example, as shown in FIG. 7, the AI task node sends the type or the structure parameter of the at least one first additional module to the first AI training node.

The fifth indication information indicates a location at which each of the at least one first additional module is to be inserted into the first submodel. For example, the first submodel is a neural network. The fifth indication information indicates a neural network layer into which each of the at least one first additional module is inserted in the neural network.

Optionally, the fifth indication information includes a first bitmap, a bit in the first bitmap corresponds to a neural network layer in the first submodel, and the bit in the first bitmap indicates whether to insert a first additional module for the neural network layer corresponding to the bit.

One bit in the first bitmap corresponds to one neural network layer or a plurality of neural network layers in the first submodel. Alternatively, a plurality of bits in the first bitmap correspond to one neural network layer in the first submodel. It should be noted that, optionally, when one bit in the first bitmap corresponds to the plurality of neural network layers in the first submodel, the first configuration information further includes eleventh indication information, and the eleventh indication information indicates a neural network layer corresponding to each bit in the first bitmap. The following provides descriptions by using an example in which one bit in the first bitmap corresponds to one neural network layer in the first submodel.

Optionally, one bit in the first bitmap corresponds to one neural network layer in the first submodel. When a value of the bit in the first bitmap is 1, it indicates to insert a corresponding first additional module between the neural network layer corresponding to the bit and a next neural network layer of the neural network layer corresponding to the bit; or when a value of the bit in the first bitmap is 0, it indicates to insert no first additional module between the neural network layer corresponding to the bit and a next neural network layer of the neural network layer corresponding to the bit. Alternatively, when a value of the bit in the first bitmap is 0, it indicates to insert no first additional module between the neural network layer corresponding to the bit and a next neural network layer of the neural network layer corresponding to the bit; or when a value of the bit in the first bitmap is 1, it indicates to insert a corresponding first additional module between the neural network layer corresponding to the bit and a next neural network layer of the neural network layer corresponding to the bit.

Optionally, bits 1 in the first bitmap are in one-to-one correspondence with the first additional modules in the at least one first additional module. For example, the at least one first additional module is in one-to-one correspondence with the bit 1 in the first bitmap based on a configuration order of the first additional modules. For example, the first submodel includes four neural network layers. Therefore, the first bitmap includes four bits, and the first bitmap is 1001. In the first bitmap, a 1st bit corresponds to a 1st neural network layer in the four neural network layers, a 2nd bit corresponds to a 2nd neural network layer in the four neural network layers, a 3rd bit corresponds to a 3rd neural network layer in the four neural network layers, and a 4th bit corresponds to a 4th neural network layer in the four neural network layers. The at least one first additional module includes a first additional module 1 and a second additional module 2. A value of the 1st bit in the first bitmap is 1, indicating to insert the first additional module 1 between the 1st neural network layer and the 2nd neural network layer. A value of the 3rd bit in the first bitmap is 1, indicating to insert a first additional module 2 between the 3rd neural network layer and the 4th neural network layer. Values of other bits in the first bitmap are both 0.

303: The first AI training node maps, by using the at least one first additional module, the symbol output by the first submodel to the symbol to be output by the first AI training node on the air interface, and sends the to-be-output symbol to a second AI training node; and/or converts, by using the at least one first additional module, the symbol that is received by the first AI training node from the second AI training node on the air interface into the update parameter for updating the first submodel, and updates the first submodel by using the update parameter.

Specifically, after the first AI training node receives the first request, the first AI training node determines the first submodel. After the first AI training node receives the first configuration information, the first AI training node determines the at least one first additional module. The first AI training node may perform step 303. For example, as shown in FIG. 4, the first AI training node converts, by using the first additional module, the symbol output by the first submodel into the symbol to be output by the first AI training node on the air interface, and sends the to-be-output symbol to the second AI training node. Alternatively, the first AI training node receives the symbol from the second AI training node on the air interface, and then converts, by using the at least one first additional module, the symbol that is received by the first AI training node from the second AI training node on the air interface into the intermediate gradient for updating the first submodel. The first AI training node updates the first submodel by using the intermediate gradient.

It can be learned that the following solution is not used: The first AI training node performs, at an application layer, source encoding on the symbol output by the first submodel, and then sends a bit stream back to a physical layer; and the physical layer performs channel encoding and symbol modulation to generate a signal for sending. Instead, the symbol output by the first submodel is converted, by using the at least one first additional module, into the symbol to be output by the first AI training node on the air interface, to send, on the wireless air interface, the symbol to be output by the first AI training node on the air interface, and send, to the second AI training node, the symbol output by the first submodel. The following solution is not used: The first AI training node performs, by using the physical layer, channel decoding and symbol demodulation on the symbol received by the first AI training node on the air interface, to restore the symbol to the bit stream; and performs source decoding by using the application layer. Instead, the first AI training node converts, by using the at least one first additional module, the symbol received by the first AI training node on the air interface into the intermediate gradient for updating the first submodel. In this way, the symbol of the second AI training node on the air interface is received, to implement joint training between the first AI training node and the second AI training node.

In this application, the first AI training node performs data and/or parameter transmission with the second AI training node in the manner in step 303. When model training precision remains unchanged, in comparison with the solution in which data and/or parameter transmission is performed by using the application layer and the physical layer, the technical solution in this application can significantly reduce transmission overheads. That is, transmission overheads between the first AI training node and the second AI training node are significantly reduced. In this application, in comparison with the solution in which data and/or parameter transmission is performed by using the application layer and the physical layer, transmission between the first AI training node and the second AI training node may be understood as lossy transmission. That is, the data and/or parameter transmission has an error. However, it is proved by experiments that, in comparison with the solution in which data and/or parameter transmission is performed by using the application layer and the physical layer, transmission performance between the first AI training node and the second AI training node in the solution in this application is not greatly degraded. The following shows some experimental data obtained by research and development personnel through the experiment in this application.

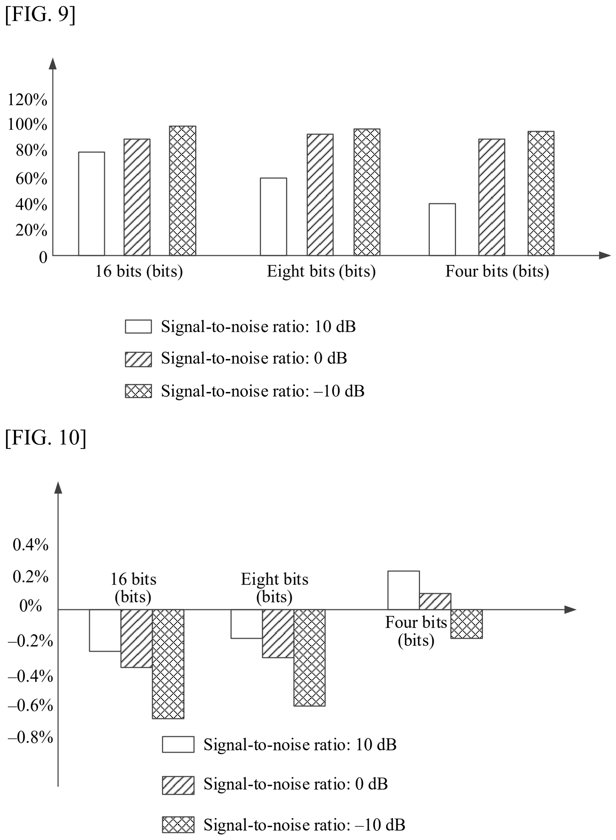

As shown in FIG. 9, when training precision of the first model remains unchanged, a vertical coordinate represents a ratio of a first difference to transmission overheads generated in the solution in which data and/or parameter transmission is performed by using the application layer and the physical layer. The first difference is a difference between the transmission overheads generated in the solution in which data and/or parameter transmission is performed by using the application layer and the physical layer and transmission overheads generated in the technical solution in this application. Therefore, a larger ratio indicates lower transmission overheads generated in the technical solution in this application. It can be learned from FIG. 9 that, when the application layer quantizes data into 16 bits in the solution in which data and/or parameter transmission is performed by using the application layer and the physical layer, it is shown that signal-to-noise ratios of a channel are 10 dB (decibel), 0 dB, and -10 dB, and ratios of the first difference to the transmission overheads generated in the solution in which data and/or parameter transmission is performed by using the application layer and the physical layer are respectively 80%, 90%, and 100%. When the application layer quantizes data into eight bits in the solution in which data and/or parameter transmission is performed by using the application layer and the physical layer, it is shown that signal-to-noise ratios of a channel are 10 dB, 0 dB, and -10 dB, and ratios of the first difference to the transmission overheads generated in the solution in which data and/or parameter transmission is performed by using the application layer and the physical layer are respectively 60%, 88%, and 98%. When the application layer quantizes data into four bits in the solution in which data and/or parameter transmission is performed by using the application layer and the physical layer, it is shown that signal-to-noise ratios of a channel are 10 dB, 0 dB, and -10 dB, and ratios of the first difference to the transmission overheads generated in the solution in which data and/or parameter transmission is performed by using the application layer and the physical layer are respectively 40%, 80%, and 95%. It can be learned that, in a case of a same signal-to-noise ratio, the transmission overheads generated in the technical solution in this application are far less than the transmission overheads generated in the solution in which data and/or parameter transmission is performed by using the application layer and the physical layer.

For example, the AI model node requests the image classification task from the AI task node. As shown in FIG. 10, when training precision of the first model remains unchanged, a vertical coordinate represents a ratio of a second difference to classification accuracy of image classification in the solution in which data and/or parameter transmission is performed by using the application layer and the physical layer. The second difference is a difference between classification accuracy of image classification in the technical solution in this application and the classification accuracy of image classification in the solution in which data and/or parameter transmission is performed by using the application layer and the physical layer. It can be learned that a larger ratio indicates higher classification accuracy of image classification in the technical solution in this application.

It can be learned from FIG. 10 that, when the application layer quantizes data into 16 bits in the solution in which data and/or parameter transmission is performed by using the application layer and the physical layer, it is shown that signal-to-noise ratios of a channel are 10 dB (decibel), 0 dB, and -10 dB, and values of vertical coordinates are respectively -0.28%, -0.38%, and -0.68%. When the application layer quantizes data into eight bits in the solution in which data and/or parameter transmission is performed by using the application layer and the physical layer, it is shown that signal-to-noise ratios of a channel are 10 dB, 0 dB, and -10 dB, and values of vertical coordinates are respectively -0.2%, -0.3%, and -0.6%. When the application layer quantizes data into four bits in the solution in which data and/or parameter transmission is performed by using the application layer and the physical layer, it is shown that signal-to-noise ratios of a channel are 10 dB, 0 dB, and -10 dB, and values of vertical coordinates are respectively 0.23%, 0.08%, and -0.2%. It can be learned that, in a case of a same signal-to-noise ratio, the classification accuracy of image classification in the technical solution in this application is not greatly reduced. Instead, when the application layer quantizes data into four bits in the solution in which data and/or parameter transmission is performed by using the application layer and the physical layer, and a signal-to-noise ratio is 10 dB or 0 dB, the classification accuracy of image classification in the technical solution in this application is higher than the classification accuracy of image classification in the solution in which data and/or parameter transmission is performed by using the application layer and the physical layer.

In a possible implementation, the at least one first additional module includes a plurality of first additional modules; and the fifth indication information indicates to insert the plurality of first additional modules between an $X^{th}$ neural network layer and an $(X+1)^{th}$ neural network layer in the first submodel, where X is greater than or equal to 1 and less than a quantity of neural network layers included in the first submodel; and a sum of input dimensions of the plurality of first additional modules is equal to an output dimension of the $X^{th}$ neural network layer, and a sum of output dimensions of the plurality of first additional modules is equal to an input dimension of the $(X+1)^{th}$ neural network layer; or a sum of input dimensions of the plurality of first additional modules is greater than an output dimension of the $X^{th}$ neural network layer, zero padding is performed on output data of the $X^{th}$ neural network layer to enable the output dimension of the $X^{th}$ neural network layer to be equal to the sum of the input dimensions of the plurality of first additional modules, and dimension reduction is performed on output data of one or more of the plurality of first additional modules to enable a sum of output dimensions of the plurality of first additional modules to be equal to an input dimension of the $(X+1)^{th}$ neural network layer. In this implementation, optionally, the first configuration information includes indexes of the plurality of first additional modules.

In another possible implementation, the fifth indication information indicates to insert a plurality of first additional modules into an outermost neural network layer in the first submodel, where a sum of input dimensions of the plurality of first additional modules is equal to an output dimension of the outermost neural network layer; or a sum of input dimensions of the plurality of first additional modules is greater than an output dimension of the outermost neural network layer, and zero padding is performed on output data of the outermost neural network layer to enable the output dimension of the outermost neural network layer to be equal to the sum of the input dimensions of the plurality of first additional modules. In this implementation, optionally, the first configuration information includes indexes of the plurality of first additional modules.

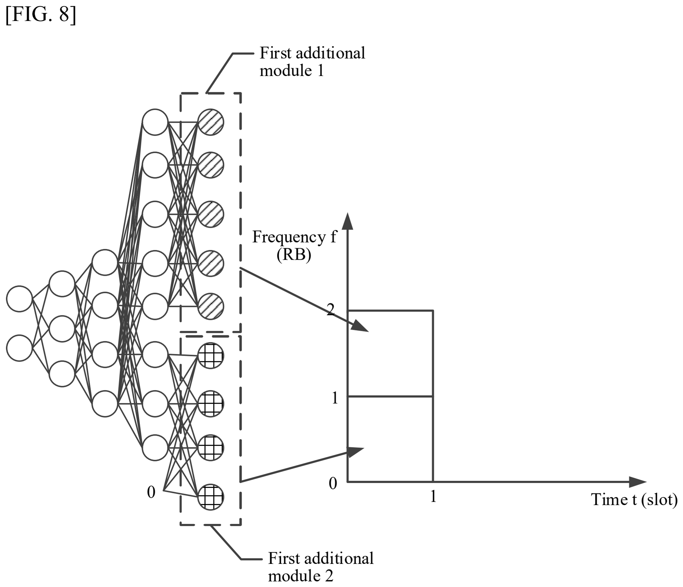

In this application, the at least one first additional module replaces the conventional physical layer. Therefore, the at least one first additional module may be generated based on a channel feature. Generally, a dimension of the first additional module is related to a radio time-frequency resource. For example, as shown in FIG. 8, a dimension of one first additional module is mapped to a radio time-frequency resource of one resource block (resource block, RB) or one slot. In other words, the dimension of the first additional module is mapped to a unit radio time-frequency resource. A dimension of each neural network layer in the first submodel is usually related to a design of the neural network. Therefore, the dimension of the first additional module does not necessarily match a dimension of the neural network. Therefore, it can be learned that the AI task node may indicate to insert a plurality of first additional modules into a same neural network layer. As shown in FIG. 8, the AI task node indicates to insert a first additional module 1 and a first additional module 2 into the outermost neural network layer in the first submodel. An input dimension of the first additional module 1 and an input dimension of the first additional module 2 are greater than the output dimension of the outermost neural network layer. Therefore, zero padding is performed on the output data of the outermost neural network layer to enable the output dimension of the outermost neural network layer to be equal to the sum of the input dimensions of the plurality of first additional modules. In this way, dimensions of the plurality of first additional modules adapt to a dimension of the outermost neural network layer. In the foregoing technical solution, that the first AI training node stores a large quantity of first additional modules with different dimensions is avoided. A problem of storage pressure of storing the first additional modules by the first AI training node is avoided. It should be noted that the first additional module 1 shown in FIG. 8 includes five output dimensions, and a connection structure between the five output dimensions and the first submodel may be understood as a structure of the first additional module 1. The first additional module 2 shown in FIG. 8 includes four output dimensions, and a connection structure between the four output dimensions and the first submodel may be understood as a structure of the first additional module 2. The example shown in FIG. 8 is merely for ease of illustration. Actually, the first additional module 1 includes the connection structure between the first additional module 1 and the first submodel, and the five output dimensions. The first additional module 2 includes the connection structure between the first additional module 2 and the first submodel, and the four output dimensions.

In still another possible implementation, the at least one first additional module includes a first additional module 1; the fifth indication information indicates to insert the first additional module 1 between the $X^{th}$ neural network layer and the $(X+1)^{th}$ neural network layer in the first submodel, where X is greater than or equal to 1 and less than the quantity of neural network layers included in the first submodel, and an input dimension of the first additional module 1 is less than the output dimension of the $X^{th}$ neural network layer. In this implementation, the first AI training node may further perform the following operations: The first AI training node determines a first additional module 2, and the first AI training node inserts the first additional module 1 and the first additional module 2 between the $X^{th}$ neural network layer and the $(X+1)^{th}$ neural network layer, where a sum of the input dimension of the first additional module 1 and an input dimension of the first additional module 2 is equal to the output dimension of the $X^{th}$ neural network layer, and a sum of an output dimension of the first additional module 1 and an output dimension of the first additional module 2 is equal to the input dimension of the $(X+1)^{th}$ neural network layer; or a sum of the input dimension of the first additional module 1 and an input dimension of the first additional module 2 is greater than the output dimension of the X$^{th}$ neural network layer, zero padding is performed on the output data of the X$^{th}$ neural network layer to enable the output dimension of the X$^{th}$ neural network layer to be equal to the sum of the input dimension of the first additional module 1 and the input dimension of the first additional module 2, and dimension reduction is performed on output data of the first additional module 1 and/or the first additional module 2 to enable a sum of an output dimension of the first additional module 1 and an output dimension of the first additional module 2 to be equal to the input dimension of the (X+1)$^{th}$ neural network layer.

In this implementation, the AI task node may indicate only an index of the first additional module 1 to the first AI training node, and indicate, by using the fifth indication information, to insert the first additional module 1 between the X$^{th}$ neural network layer and the (X+1)$^{th}$ neural network layer in the first submodel. After determining the first additional module 1, the first AI training node determines that the input dimension of the first additional module 1 is less than an input dimension of the X$^{th}$ neural network layer. Therefore, the first AI training node may select a second additional module 2 from preset first additional modules, and insert the first additional module 1 and the first additional module 2 between the X$^{th}$ neural network layer and the (X+1)$^{th}$ neural network layer in the first submodel. In this way, a sum of the input dimension of the first additional module 1 and an input dimension of the second additional module 2 adapts to the output dimension of the X$^{th}$ neural network layer in the first submodel, and the output dimension of the first additional module 1 and the output dimension of the first additional module 2 adapt to the input dimension of the (X+1)$^{th}$ neural network layer.

In still another possible implementation, the at least one first additional module includes a first additional module 1; the fifth indication information indicates to insert the first additional module 1 into the outermost neural network layer in the first submodel; and in this implementation, the first AI training node may further perform the following operations: The first AI training node determines a first additional module 2, and the first AI training node inserts the first additional module 1 and the first additional module 2 into the outermost neural network layer, where a sum of an input dimension of the first additional module 1 and an input dimension of the first additional module 2 is equal to the output dimension of the outermost neural network layer; or a sum of an input dimension of the first additional module 1 and an input dimension of the first additional module 2 is greater than the output dimension of the outermost neural network layer, and zero padding is performed on the output data of the outermost neural network layer to enable the output dimension of the outermost neural network layer to be equal to the sum of the input dimension of the first additional module 1 and the input dimension of the first additional module 2.

In this implementation, the AI task node may indicate only an index of the first additional module 1 to the first AI training node, and indicate, by using the fifth indication information, to insert the first additional module 1 into the outermost neural network layer in the first submodel. After determining the first additional module 1, the first AI training node determines that the input dimension of the first additional module 1 is less than the output dimension of the outermost neural network layer. Therefore, the first AI training node may select a second additional module 2 from preset first additional modules, and insert the first additional module 1 and the first additional module 2 between the X$^{th}$ neural network layer and the (X+1)$^{th}$ neural network layer in the first submodel. In this way, a sum of the input dimension of the first additional module 1 and an input dimension of the second additional module 2 adapts to the output dimension of the outermost neural network layer.

It should be noted that the foregoing several implementations are described by using an example in which two first additional modules are inserted into one neural network layer. During actual application, more first additional modules may be inserted into the neural network layer, so that dimensions of the first additional modules adapt to a dimension of the inserted neural network layer.

Optionally, step 303 specifically includes: The first AI training node performs redundancy processing on the to-be-output symbol by using a first redundancy processing module, and then sends a to-be-output symbol obtained through redundancy processing to the second AI training node; and/or the first AI training node performs, by using the first redundancy processing module, redundancy removal processing on the symbol that is received by the first AI training node from the second AI training node on the air interface, and then converts a symbol obtained through redundancy removal processing into the update parameter by using the at least one first additional module.

Optionally, the first redundancy processing module is a neural network or a signal processing module. This is not specifically limited in this application. For the signal processing module, refer to the foregoing related descriptions.

Optionally, a dimension of the first redundancy processing module is equal to a product of a redundancy multiple and a dimension of the at least one first additional module. For example, $\beta$ is the redundancy multiple, namely, a redundancy multiple corresponding to redundancy sending performed by the first AI training node. Likewise, for the second AI training node, $\beta$ is a redundancy multiple corresponding to redundancy sending performed by the second AI training node.

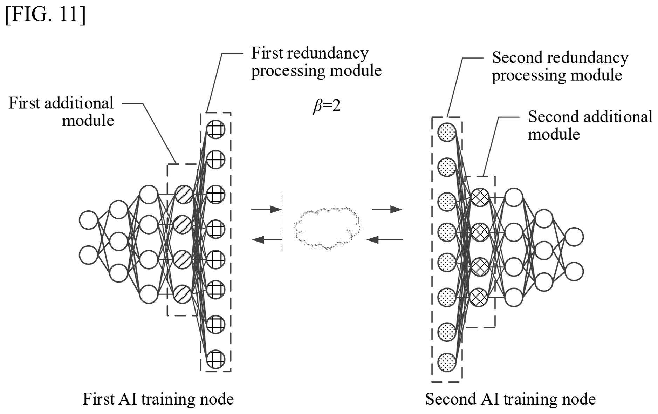

For example, in a scenario in which the AI model node requests a part of scenario regression tasks, the lossy transmission between the first AI training node and the second AI training node causes limited model training performance. The first AI training node may use a redundancy transmission manner to improve model training performance in this scenario. As shown in FIG. 11, $\beta$ is equal to 2. The first AI training node converts, by using the first additional module, the symbol output by the first submodel into the symbol to be output by the first AI training node on the air interface. The first AI training node performs, by using the first redundancy processing module, redundancy processing on the symbol to be output by the first AI training node on the air interface, and sends, to the second AI training node, the to-be-output symbol obtained through redundancy processing. Correspondingly, the second AI training node also performs corresponding redundancy transmission. Therefore, the first AI training node performs, by using the first redundancy processing module, redundancy removal processing on the symbol that is received by the first AI training node from the second AI training node on the air interface, and then converts the symbol obtained through redundancy removal processing into the update parameter by using the first additional module. Then, the first AI training node updates the first submodel by using the update parameter. It should be noted that the first additional module shown in FIG. 11 includes four output dimensions, and a connection structure between the four output dimensions and the first submodel may be understood as a structure of the first additional module. The example shown in FIG. 11 is merely for ease of illustration. Actually, the first additional module includes the connection structure between the four output dimensions of the first additional module and the first submodel, and the four output dimensions. The first redundancy processing module shown in FIG. 11 includes eight output dimensions, and a connection structure between the eight output dimensions and the first submodel may be understood as a structure of the first redundancy processing module. The example shown in FIG. 11 is merely for ease of illustration. Actually, the first redundancy processing module includes the connection structure between the eight output dimensions of the first redundancy processing module and the first submodel, and the eight output dimensions.

A second additional module shown in FIG. 11 includes four output dimensions, and a connection structure between the four output dimensions and the second submodel may be understood as a structure of the second additional module. The example shown in FIG. 11 is merely for ease of illustration. Actually, the second additional module includes the connection structure between the four output dimensions of the second additional module and the second submodel, and the four output dimensions. A second redundancy processing module shown in FIG. 11 includes eight output dimensions, and a connection structure between the eight output dimensions and the second submodel may be understood as a structure of the second redundancy processing module. The example shown in FIG. 11 is merely for ease of illustration. Actually, the second redundancy processing module includes the connection structure between the eight output dimensions of the second redundancy processing module and the second submodel, and the eight output dimensions.

In a possible implementation, the redundancy multiple is determined based on a signal-to-noise ratio of a current channel and a target signal-to-noise ratio. For example, the redundancy multiple $\beta$ may be represented as the following formula 5:

$$\beta = \begin{cases} 10^{(s_t - snr)/10} & , snr < s_t \\ 1 & , \text{others} \end{cases} \quad (5)$$

$snr$ represents the signal-to-noise ratio of the current channel, and $s_t$ represents the target signal-to-noise ratio, namely, a signal-to-noise ratio corresponding to target performance corresponding to the first model that the AI model node requests to train. The target performance corresponding to the first model is corresponding task execution performance needed when the AI model node executes the corresponding task by using the first model. For example, for the image classification task, the target performance corresponding to the first model may be classification accuracy that needs to be achieved when the AI model node performs image classification by using the first model obtained through training.

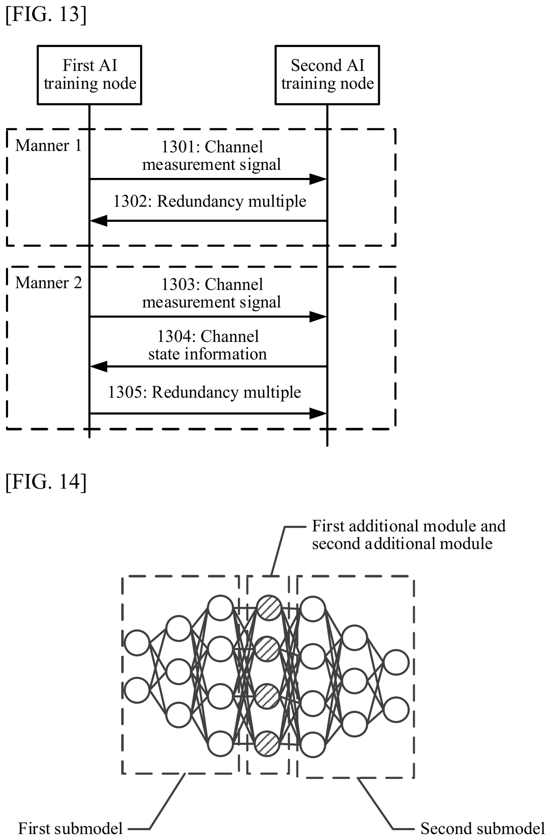

There are a plurality of manners of obtaining the redundancy multiple by the first AI training node. For details, refer to related descriptions in an embodiment shown in FIG. 13 hereinafter. Details are not described herein again.

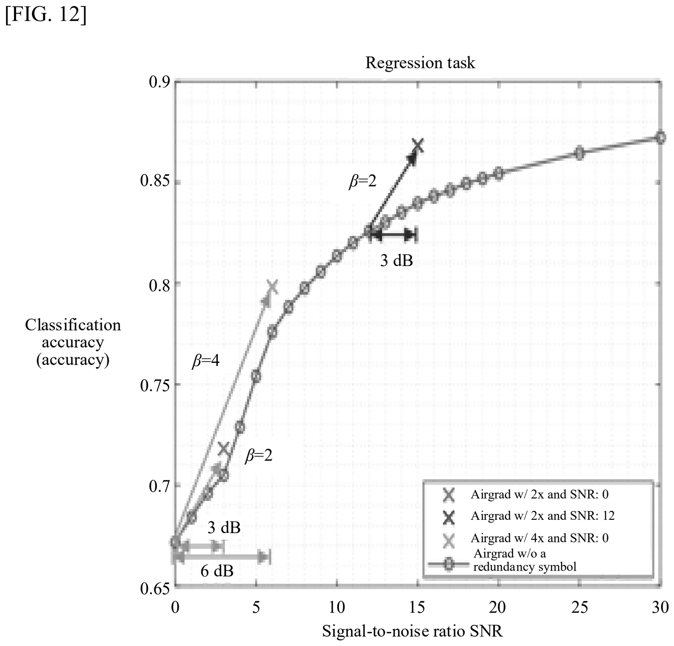

In this application, the first AI training node and the second AI training node may implement a signal power gain in the redundancy transmission manner, and a data enhancement gain is also brought. As shown in FIG. 12, a curve 1 indicates values of accuracy of image classification in different signal-to-noise ratios in the technical solution in this application when no redundancy transmission manner is used. It can be learned from FIG. 12 that classification accuracy decreases as a signal-to-noise ratio decreases. In FIG. 12, a marker x indicates that the technical solution in this application is performed in the redundancy transmission manner. It can be learned that, when the signal-to-noise ratio (signal-to-noise ratio, SNR) of the current channel=12 dB, and $\beta$=2, an equivalent signal-to-noise ratio that is of the current channel and that can be obtained is 15 dB. Therefore, corresponding classification accuracy is also high. Therefore, in the technical solution in this application, redundancy transmission is performed between the first AI training node and the second AI training node. This helps increase the signal power gain, and further brings the data enhancement gain, that is, improves the classification accuracy.

It should be noted that there is no fixed execution order between step 301 and step 302. Step 301 may be performed before step 302, step 302 is performed before step 301, or step 301 and step 302 are simultaneously performed based on a case. This is not specifically limited in this application.

Optionally, the embodiment shown in FIG. 3A and FIG. 3B further includes 301b, step 302a, and step 303a.

301b: The AI task node sends a third request to the second AI training node, where the third request is for requesting the second AI training node to train the second submodel. Accordingly, the second AI training node receives the third request from the AI task node.

The third request is similar to the first request. For the third request, refer to the related descriptions of the first request. For example, as shown in FIG. 4, the first model is the model that the AI model node requests to train. The AI task node splits the first model into the first submodel and the second submodel. Then, the AI task node sends the third request to the second AI training node, to request the second AI training node to train the second submodel.

Content included in the third request is similar to the content included in the first request. For details, refer to the related descriptions of the content included in the first request. Details are not described herein again.

302a: The AI task node sends second configuration information to the second AI training node, where the second configuration information is for configuring at least one second additional module. Accordingly, the second AI training node receives the second configuration information from the AI task node.

The at least one second additional module is configured to convert the update parameter for updating the first submodel into the symbol to be output by the second AI training node on the air interface, and/or the at least one second additional module is configured to map the symbol received by the second AI training node on the air interface to a symbol to be input into the second submodel.

For the update parameter, refer to the related descriptions in step 302. Details are not described herein again. Optionally, each of the at least one second additional module is a neural network or a signal processing module. For the signal processing module, refer to the related descriptions in step 302.

For example, as shown in FIG. 4, the at least one second additional module includes one second additional module. The second AI training node maps the symbol that is received by the second AI training node from the first AI training node on the air interface to the symbol to be input into the second submodel, and inputs the symbol into the second submodel, to obtain output data of the second submodel. Then, the second AI training node obtains, through calculation based on the output data and a second loss function that is configured by the AI task node for the second AI training node, a weight gradient for updating the second submodel and the intermediate gradient for updating the first submodel. For a process of generating the intermediate gradient, refer to the related descriptions in the patent document No. 202110412895.X. Then, the second AI training node updates the second submodel by using the weight gradient. The second AI training node converts, by using the at least one second additional module, the intermediate gradient into the symbol to be output by the second AI training node on the air interface, and sends the to-be-output symbol to the first AI training node. It should be noted that the second additional module shown in FIG. 4 includes four output dimensions. A connection structure between the four output dimensions and the second submodel may be understood as a structure of the second additional module. The example shown in FIG. 4 is merely for ease of illustration. Actually, the second additional module includes the connection structure between the four output dimensions of the second additional module and the second submodel, and the four output dimensions.

It should be noted that a process in which the second AI training node converts, by using the at least one second additional module, the update parameter for updating the first submodel into the symbol to be output by the second AI training node on the air interface is similar to the process in which the first communication apparatus maps the first intermediate gradient to the air interface resource to generate the first gradient signal in the patent document No. 202110412895.X. For details, refer to the related descriptions in the patent document. A process in which the second AI training node maps, by using the at least one second additional module, the symbol received by the second AI training node on the air interface to the symbol to be input into the second submodel is similar to the process in which the second communication apparatus determines the second intermediate gradient based on the second gradient signal in the patent document No. 202110412895.X. For details, refer to the related descriptions in the patent document.

The second configuration information is similar to the first configuration information. For details, refer to the foregoing related descriptions of the first configuration information. Details are not described herein again.

It should be noted that there is no fixed execution order between step 301b and step 302a. Step 301b may be performed before step 302a, step 302a is performed before step 301b, or step 301b and step 302a are simultaneously performed based on a case. This is not specifically limited in this application.

303a: The second AI training node converts, by using the at least one second additional module, the update parameter for updating the first submodel of the first AI training node into the symbol to be output by the second AI training node on the air interface, and sends the to-be-output symbol to the first AI training node; and/or maps, by using the at least one second additional module, the symbol that is received by the second AI training node from the first AI training node on the air interface to the symbol to be input into the second submodel of the second AI training node.

Specifically, after the second AI training node receives the third request, the second AI training node determines the second submodel. After the second AI training node receives the second configuration information, the second AI training node determines the at least one second additional module. Then, the second AI training node performs step 303a. For example, as shown in FIG. 4, the second AI training node determines the intermediate gradient for updating the first submodel. Then, the second AI training node converts, by using the at least one second additional module, the intermediate gradient into the symbol to be output by the second AI training node on the air interface, and sends the to-be-output symbol to the first AI training node; and/or the second AI training node maps the symbol that is received by the second AI training node from the first AI training node on the air interface to the symbol to be input into the second submodel of the second AI training node. The second AI training node inputs the symbol to be input into the second submodel of the second AI training node into the second submodel, to obtain the output data of the second submodel. Then, the second AI training node obtains, through calculation based on the output data and the second loss function that is configured by the AI task node for the second AI training node, the weight gradient for updating the second submodel and the intermediate gradient for updating the first submodel. The second AI training node updates the second submodel based on the weight gradient.

Optionally, step 303a specifically includes: The second AI training node performs redundancy processing on the to-be-output symbol by using the second redundancy processing module, and then sends a to-be-output symbol obtained through redundancy processing to the first AI training node; and/or the second AI training node performs, by using the second redundancy processing module, redundancy removal processing on the symbol that is received by the second AI training node from the first AI training node on the air interface, and then converts, by using the at least one second additional module, a symbol obtained through redundancy removal processing into the symbol to be input into the second submodel of the second AI training node. This implementation is similar to the process in which the first AI training node performs redundancy transmission in step 303. For details, refer to the foregoing related descriptions. Optionally, a dimension of the second redundancy processing module is equal to a product of the redundancy multiple and a dimension of the at least one second additional module. For the redundancy multiple $\beta$, refer to the foregoing related descriptions.

As shown in FIG. 11, $\beta$ is equal to 2. The second AI training node performs redundancy processing on the to-be-output symbol by using the second redundancy processing module, and then sends the to-be-output symbol obtained through redundancy processing to the first AI training node. Correspondingly, the first AI training node performs redundancy sending. Therefore, the second AI training node performs, by using the second redundancy processing module, redundancy removal processing on the symbol that is received by the second AI training node from the first AI training node on the air interface, and then converts, by using the at least one second additional module, the symbol obtained through redundancy removal processing into the symbol to be input into the second submodel of the second AI training node.

Optionally, an input dimension of the second redundancy processing module is greater than or equal to an output dimension of the at least one second additional module, and an output dimension of the second redundancy processing module is less than or equal to an output dimension of the first redundancy processing module. Generally, the output dimension of the second redundancy processing module is equal to the output dimension of the first redundancy processing module. For example, as shown in FIG. 11, the output dimension of the first redundancy processing module is eight, the output dimension of the second additional module is four, and both the input dimension and the output dimension of the second redundancy processing module are eight.

There are a plurality of manners of obtaining the redundancy multiple by the second AI training node. For details, refer to related descriptions in the embodiment shown in FIG. 13 hereinafter. Details are not described herein again.

It should be noted that there is no fixed execution order between step 301b, step 302a, and step 303a and the step 301 to step 303. Step 301b, step 302a, and step 303a may be performed before step 301 to step 303, step 301 to step 303 are performed before step 301b, step 302a, and step 303a, or step 301b, step 302a, and step 303a and step 301 to step 303 are simultaneously performed based on a case. This is not specifically limited in this application.

Optionally, the embodiment shown in FIG. 3A and FIG. 3B further includes step 301c to step 301f.

301c: The AI task node sends a second request to the first AI training node, where the second request is for requesting channel state information between the first AI training node and the second AI training node. Accordingly, the first AI training node receives the second request from the AI task node.

301d: The first AI training node sends a channel measurement signal to the second AI training node. Accordingly, the second AI training node receives the channel measurement signal from the first AI training node.

301e: The second AI training node sends the channel state information to the first AI training node. Accordingly, the first AI training node receives the channel state information from the second AI training node.

The channel state information is obtained by the second AI training node by measuring the channel measurement signal.

301f: The first AI training node sends the channel state information to the AI task node. Accordingly, the AI task node receives the channel state information from the first AI training node.

Based on step 301f, optionally, the embodiment shown in FIG. 3A and FIG. 3B further includes: The AI task node determines the at least one first additional module based on the channel state information and the task type. Optionally, the AI task node determines the at least one second additional module based on the channel state information and the task. In this way, the AI task node configures appropriate additional modules for the first AI training node and the second AI training node based on a channel state between the first AI training node and the second AI training node, so that channel interference is resisted.

It should be noted that, optionally, when the AI task node determines, based on the channel state information, that the channel state between the first AI training node and the second AI training node is poor, the AI task node may alternatively reselect another AI training node, re-split the first model, and request the reselected AI training node to train a submodel obtained through splitting.

Optionally, the embodiment shown in FIG. 3A and FIG. 3B further includes step 304 to step 306. Step 304 may be performed after step 303. Step 305 may be performed after step 303a. Step 306 may be performed after step 304 and step 305.

304: The first AI training node sends a structure parameter of the first submodel obtained through training to the AI task node. Accordingly, the AI task node receives the structure parameter of the first submodel obtained through training from the first AI training node.

Specifically, the first AI training node obtains, through training of the first submodel, the structure parameter of the first submodel obtained through training. Then, the first AI training node may send the structure parameter of the first submodel obtained through training to the AI task node.

Optionally, the first AI training node further sends the structure parameter of the at least one first additional module to the AI task node. In this implementation, the first AI training node reports the at least one first additional module as the part of the first submodel to the AI task node. For example, as shown in FIG. 4, the first AI training node reports, to the AI task node, the structure parameters corresponding to the first submodel and the first additional module.

305: The second AI training node sends a structure parameter of a second submodel obtained through training to the AI task node. Accordingly, the AI task node receives the structure parameter of the second submodel obtained through training from the second AI training node.

Specifically, the second AI training node obtains, through training of the second submodel, the structure parameter of the second submodel obtained through training. Then, the second AI training node may send the structure parameter of the second submodel obtained through training to the AI task node.

Optionally, the second AI training node further sends a structure parameter of the at least one second additional module to the AI task node. In this implementation, the second AI training node reports the at least one second additional module as a part of the second submodel to the AI task node. For example, as shown in FIG. 4, the second AI training node reports, to the AI task node, the structure parameters corresponding to the second submodel and the second additional module.

306: The AI task node sends a structure parameter of the first model obtained through training to the AI model node. Accordingly, the AI model node receives the structure parameter of the first model obtained through training from the AI task node.

Specifically, the AI task node determines the structure parameter of the first model obtained through training based on the structure parameter of the first submodel obtained through training and the structure parameter of the second submodel obtained through training. Then, the AI task node sends the structure parameter of the first model obtained through training to the AI model node. In this way, the first model is deployed on the AI model node.

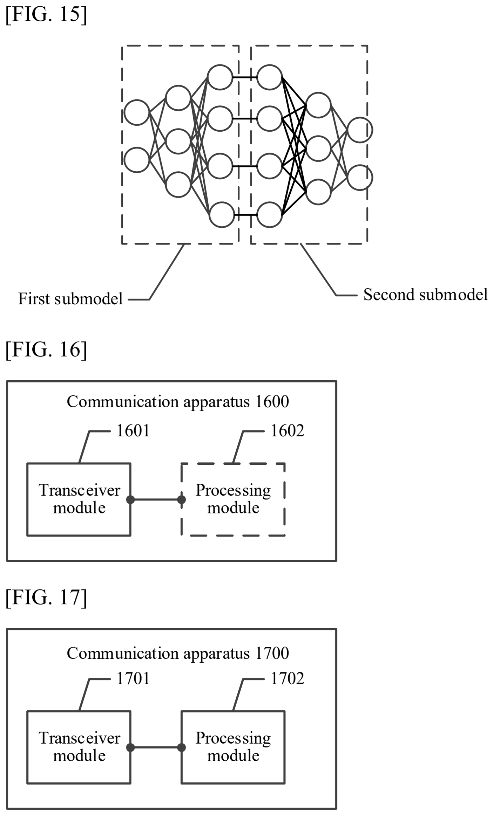

Optionally, the first AI training node further sends the structure parameter of the at least one first additional module to the AI task node. The second AI training node further sends the structure parameter of the at least one second additional module to the AI task node. That is, the first AI training node reports the at least one first additional module as the part of the first submodel to the AI task node. The second AI training node reports the at least one second additional module as the part of the second submodel to the AI task node. The AI task node may reserve the at least one first additional module and the at least one second additional module. For example, FIG. 14 shows a first model obtained by reserving the first additional module and the second additional module by the AI task node. Output dimensions of the first additional module are combined with output dimensions of the second additional module. It should be noted that the diagram shown in FIG. 14 is merely for ease of illustration. Actually, the first additional module shown in FIG. 14 includes four output dimensions of the first additional module and a connection structure between the first additional module and the first submodel. The second additional module shown in FIG. 14 includes four output dimensions of the second additional module and a connection structure between the second additional module and the second submodel. The first additional module and the second additional module share the four output dimensions. Alternatively, the AI task node may remove the at least one first additional module and the at least one second additional module. For example, FIG. 15 shows a first model obtained by removing the at least one second additional module by the AI task node.

It should be noted that, in the embodiment shown in FIG. 3A and FIG. 3B above, a process in which the AI task node splits the first model into the first submodel and the second submodel, requests the first AI training node to train the first submodel, and requests the second AI training node to train the second submodel is used as an example for description. During actual application, the AI task node may split the first model into a plurality of submodels, and then the AI task node requests a plurality of AI training nodes to respectively train corresponding submodels. For example, the AI task node may split the first model into three submodels. The AI task node requests the first AI training node to train a 1st submodel in the three submodels, requests the second AI training node to train a 2nd submodel in the three submodels, and requests a third AI training node to train a 3rd submodel in the three submodels. This is not specifically limited in this application.

It should be noted that, optionally, in an ORAN system, an O-CU or an O-DU may be for performing the operation performed by the AI task node in the embodiment shown in FIG. 3A and FIG. 3B above. If the O-CU is divided into an O-CU-UP and an O-CU-CP, the O-CU-UP and/or the O-CU-CP may be for performing the operations performed by the AI task node in the embodiment shown in FIG. 3A and FIG. 3B above. Optionally, an O-CU or an O-DU may be for performing the operation performed by the AI model node in the embodiment shown in FIG. 3A and FIG. 3B above. If the O-CU is divided into an O-CU-UP and an O-CU-CP, the O-CU-UP and/or the O-CU-CP may be for performing the operation performed by the AI model node in the embodiment shown in FIG. 3A and FIG. 3B above. Optionally, an O-RU, an O-DU, or an O-CU may be for performing the operation performed by the first AI training node in the embodiment shown in FIG. 3A and FIG. 3B above. If the O-CU is divided into an O-CU-UP and an O-CU-CP, the O-CU-UP and/or the O-CU-CP may be for performing the operation performed by the first AI training node in the embodiment shown in FIG. 3A and FIG. 3B above. Optionally, an O-RU, an O-DU, or an O-CU may be for performing the operation performed by the second AI training node in the embodiment shown in FIG. 3A and FIG. 3B above. If the O-CU is divided into an O-CU-UP and an O-CU-CP, the O-CU-UP and/or the O-CU-CP may be for performing the operation performed by the second AI training node in the embodiment shown in FIG. 3A and FIG. 3B above.

In this application, optionally, the AI task node may be a first access network device, and the first AI training node may be a second access network device. A communication system includes the AI task node and the first AI training node. The first access network device is configured to perform the operation performed by the AI task node in the embodiment shown in FIG. 3A and FIG. 3B above. The second access network device is configured to perform the operation performed by the first AI training node in the embodiment shown in FIG. 3A and FIG. 3B above. Optionally, the communication system further includes the second AI training node, the second AI training node may be a third access network device, and the third access network device is configured to perform the operation performed by the second AI training node in the embodiment shown in FIG. 3A and FIG. 3B above. Optionally, the communication system further includes the AI model node, the AI model node is a fourth access network device, and the fourth access network device is configured to perform the operation performed by the AI model node in the embodiment shown in FIG. 3A and FIG. 3B above.

In this application, optionally, the first AI training node is a first terminal device, and the second AI training node is a second terminal device. A communication system includes the first terminal device and the second terminal device. The first terminal device is configured to perform the operation performed by the first AI training node in the embodiment shown in FIG. 3A and FIG. 3B above. The second terminal device is configured to perform the operation performed by the second AI training node in the embodiment shown in FIG. 3A and FIG. 3B above. Optionally, the communication system further includes an AI task node, and the AI task node is a first access network device or a third terminal device. The first access network device or the third terminal device is configured to perform the operation performed by the AI task node in the embodiment shown in FIG. 3A and FIG. 3B above. Optionally, the communication system further includes an AI model node, the AI model node is a second access network device, and the second access network device is configured to perform the operation performed by the AI model node in the embodiment shown in FIG. 3A and FIG. 3B above.

In this application, optionally, the first AI training node may be a first access network device, and the second AI training node may be a second access network device. A communication system includes the first access network device and the second access network device. The first access network device is configured to perform the operation performed by the first AI training node in the embodiment shown in FIG. 3A and FIG. 3B above. The second access network device is configured to perform the operation performed by the second AI training node in the embodiment shown in FIG. 3A and FIG. 3B above. Optionally, the communication system further includes the AI task node, the AI task node may be a server, and the server is configured to perform the operation performed by the AI task node in the embodiment shown in FIG. 3A and FIG. 3B above. Optionally, the communication system further includes the AI model node, the AI model node may be a third access network device or a terminal device, and the third access network device or the terminal device is configured to perform the operation performed by the AI model node in the embodiment shown in FIG. 3A and FIG. 3B above.

In this embodiment of this application, the AI task node sends the first request to the first AI training node, where the first request is for requesting the first AI training node to train the first submodel. Then, the AI task node sends the first configuration information to the first AI training node, where the first configuration information is for configuring the at least one first additional module; and the at least one first additional module is configured to map the symbol output by the first submodel to the symbol to be output by the first AI training node on the air interface, and/or the at least one first additional module is configured to convert the symbol received by the first AI training node on the air interface into the update parameter for updating the first submodel. It can be learned that, in the technical solution in this application, the AI task node may configure the at least one first additional module for the first AI training node. The at least one first additional module is configured to map the symbol output by the first submodel to the symbol to be output by the first AI training node on the air interface, and/or the at least one first additional module is configured to convert the symbol received by the first AI training node on the air interface into the update parameter for updating the first submodel. This helps the first AI training node perform transmission of data, a parameter, and/or the like with the second AI training node via the at least one first additional module, to implement joint training between the first AI training node and the second AI training node.

Based on the embodiment shown in FIG. 13, the following describes two possible implementations in which the first AI training node and the second AI training node separately obtain the redundancy multiple. This application is still applicable to another manner, and the following implementations do not constitute a limitation on this application.

Refer to FIG. 13. The following describes a manner 1 based on step 1301 and step 1302.

1301: A first AI training node sends a channel measurement signal to a second AI training node. Accordingly, the second AI training node receives the channel measurement signal from the first AI training node.

Specifically, after the second AI training node receives the channel measurement signal, the second AI training node measures the channel measurement signal, to obtain channel state information between the first AI training node and the second AI training node. Then, the second AI training node determines a redundancy multiple based on the channel state information. For example, the second AI training node may determine, based on the channel state information, a signal-to-noise ratio of a current channel between the first AI training node and the second AI training node. Then, the second AI training node determines the redundancy multiple based on target performance corresponding to a first model and the signal-to-noise ratio of the current channel. For the target performance corresponding to the first model, refer to the foregoing related descriptions. For example, higher target performance indicates a lower signal-to-noise ratio and a larger redundancy multiple.

1302: The second AI training node sends the redundancy multiple to the first AI training node. Accordingly, the first AI training node receives the redundancy multiple from the second AI training node.

In step 1301, the second AI training node determines the redundancy multiple. The second AI training node may send the redundancy multiple to the first AI training node.

The following describes a manner 2 based on step 1303 to step 1305.

1303: A first AI training node sends a channel measurement signal to a second AI training node. Accordingly, the second AI training node receives the channel measurement signal from the first AI training node.

1304: The second AI training node sends channel state information to the first AI training node. Accordingly, the first AI training node receives the channel state information from the second AI training node.

After the second AI training node receives the channel measurement signal, the second AI training node measures the channel measurement signal, to obtain the channel state information between the first AI training node and the second AI training node.

1305: The first AI training node sends a redundancy multiple to the second AI training node. Accordingly, the second AI training node receives the redundancy multiple from the first AI training node.

After the first AI training node receives the channel state information, the first AI training node determines the redundancy multiple based on the channel state information.

Optionally, in an ORAN system, an O-RU, an O-DU, or an O-CU may be for performing the operation performed by the first AI training node in the embodiment shown in FIG. 13 above. If the O-CU is divided into an O-CU-UP and an O-CU-CP, the O-CU-UP and/or the O-CU-CP may be for performing the operation performed by the first AI training node in the embodiment shown in FIG. 13 above. Optionally, an O-RU, an O-DU, or an O-CU may be for performing the operation performed by the second AI training node in the embodiment shown in FIG. 13 above. If the O-CU is divided into an O-CU-UP and an O-CU-CP, the O-CU-UP and/or the O-CU-CP may be for performing the operation performed by the second AI training node in the embodiment shown in FIG. 13 above.

The following describes communication apparatus provided in embodiments of this application.

FIG. 16 is a diagram of a structure of a communication apparatus according to an embodiment of this application. Refer to FIG. 16. The communication apparatus may be configured to perform the processes performed by the AI task node in the embodiment shown in FIG. 3A and FIG. 3B. For details, refer to the related descriptions in the foregoing method embodiment.

The communication apparatus 1600 includes a transceiver module 1601. Optionally, the communication apparatus 1600 further includes a processing module 1602.

The processing module 1602 is configured to process data. The transceiver module 1601 may implement a corresponding communication function. The transceiver module 1601 may also be referred to as a communication interface or a communication module.

Optionally, the communication apparatus 1600 may further include a storage module. The storage module may be configured to store instructions and/or data. The processing module 1602 may read the instructions and/or the data in the storage module, so that the communication apparatus implements the foregoing method embodiment.

The communication apparatus 1600 may be configured to perform the actions performed by the AI task node in the foregoing method embodiment. The communication apparatus 1600 may be an AI task node or a component that may be configured on the AI task node. The processing module 1602 is configured to perform the processing-related operation on the AI task node side in the foregoing method embodiment. The transceiver module 1601 is configured to perform the receiving-related operation on the AI task node side in the foregoing method embodiment.

Optionally, the transceiver module 1601 may include a sending module and a receiving module. The sending module is configured to perform the sending operation in the foregoing method embodiment. The receiving module is configured to perform the receiving operation in the foregoing method embodiment.

It should be noted that the communication apparatus 1600 may include the sending module but not include the receiving module. Alternatively, the communication apparatus 1600 may include the receiving module but not include the sending module. This may be specifically determined depending on whether the foregoing solution performed by the communication apparatus 1600 includes a sending action and a receiving action.

Optionally, the communication apparatus 1600 is configured to perform the actions performed by the AI task node in the embodiment shown in FIG. 3A and FIG. 3B. For details, refer to related descriptions in the embodiment shown in FIG. 3A and FIG. 3B above. Details are not described herein.

It should be understood that a specific process in which the modules perform the foregoing corresponding processes has been described in detail in the foregoing method embodiment. For brevity, details are not described herein again.

The processing module 1602 in the foregoing embodiment may be implemented by at least one processor or processor-related circuit. The transceiver module 1601 may be implemented by a transceiver or a transceiver-related circuit. The transceiver module 1601 may also be referred to as a communication module or a communication interface. The storage module may be implemented by at least one memory.

FIG. 17 is a diagram of another structure of a communication apparatus according to an embodiment of this application. Refer to FIG. 17. The communication apparatus may be configured to perform the process performed by the first AI training node or the second AI training node in any embodiment in FIG. 3A, FIG. 3B, and FIG. 13. For details, refer to the related descriptions in the foregoing method embodiment.

The communication apparatus 1700 includes a transceiver module 1701 and a processing module 1702.

The processing module 1702 is configured to process data. The transceiver module 1701 may implement a corresponding communication function. The transceiver module 1701 may also be referred to as a communication interface or a communication module.

Optionally, the communication apparatus 1700 may further include a storage module. The storage module may be configured to store instructions and/or data. The processing module 1702 may read the instructions and/or the data in the storage module, so that the communication apparatus implements the foregoing method embodiment.

The communication apparatus 1700 may be configured to perform the actions performed by the first AI training node or the second AI training node in the foregoing method embodiment. The communication apparatus 1700 may be a first AI training node or a second AI training node, or a component that may be configured on the first AI training node or the second AI training node. The processing module 1702 is configured to perform the processing-related operation on the first AI training node side or the second AI training node in the foregoing method embodiment. The transceiver module 1701 is configured to perform the sending or receiving-related operation on the first AI training node side or the second AI training node side in the foregoing method embodiment.

Optionally, the transceiver module 1701 may include a sending module and a receiving module. The sending module is configured to perform the sending operation in the foregoing method embodiment. The receiving module is configured to perform the receiving operation in the foregoing method embodiment.

It should be noted that the communication apparatus 1700 may include the sending module but not include the receiving module. Alternatively, the communication apparatus 1700 may include the receiving module but not include the sending module. This may be specifically determined depending on whether the foregoing solution performed by the communication apparatus 1700 includes a sending action and a receiving action.

Optionally, the communication apparatus 1700 is configured to perform the actions performed by the first AI training node or the second AI training node in any embodiment in FIG. 3A, FIG. 3B, and FIG. 13 above. For details, refer to the related descriptions in any embodiment in FIG. 3A, FIG. 3B, and FIG. 13 above. Details are not described herein.

It should be understood that a specific process in which the modules perform the foregoing corresponding processes has been described in detail in the foregoing method embodiment. For brevity, details are not described herein again.

The processing module 1702 in the foregoing embodiment may be implemented by at least one processor or processor-related circuit. The transceiver module 1701 may be implemented by a transceiver or a transceiver-related circuit. The transceiver module 1701 may also be referred to as a communication module or a communication interface. The storage module may be implemented by at least one memory.

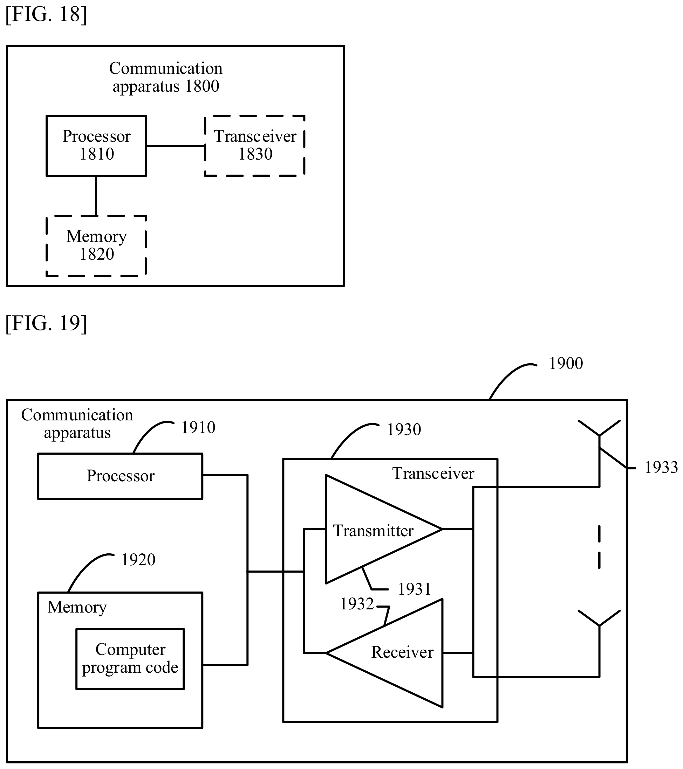

An embodiment of this application further provides a communication apparatus 1800. Refer to FIG. 18. The communication apparatus 1800 includes a processor 1810. The processor 1810 is coupled to a memory 1820. The memory 1820 is configured to store a computer program or instructions and/or data. The processor 1810 is configured to execute the computer program or the instructions and/or the data stored in the memory 1820, so that the method in the foregoing method embodiment is performed. The communication apparatus 1800 is configured to implement the operations performed by the AI task node, the first AI training node, or the second AI training node in the foregoing method embodiment.

Optionally, the communication apparatus 1800 includes one or more processors 1810.

Optionally, as shown in FIG. 18, the communication apparatus 1800 may further include the memory 1820.

Optionally, the communication apparatus 1800 may include one or more memories 1820.

Optionally, the memory 1820 and the processor 1810 may be integrated together or separately disposed.

Optionally, as shown in FIG. 18, the communication apparatus 1800 may further include a transceiver 1830, and the transceiver 1830 is configured to receive a signal and/or send a signal. For example, the processor 1810 is configured to control the transceiver 1830 to receive the signal and/or send the signal.

This application further provides a communication apparatus 1900. The communication apparatus 1900 may be a terminal device, a processor of the terminal device, or a chip. The communication apparatus 1900 may be configured to perform the operations performed by the AI task node, the first AI training node, or the second AI training node in the foregoing method embodiment.

When the communication apparatus 1900 is the terminal device, FIG. 19 is a simplified diagram of a structure of a terminal device. As shown in FIG. 19, the terminal device includes a processor, a memory, and a transceiver. The memory may store computer program code. The transceiver includes a transmitter 1931, a receiver 1932, a radio frequency circuit (not shown in the figure), an antenna 1933, and an input/output apparatus (not shown in the figure).

The processor is mainly configured to: process a communication protocol and communication data, control the terminal device, execute a software program, process data of the software program, and so on. The memory is mainly configured to store the software program and data. The radio frequency circuit is mainly configured to perform conversion between a baseband signal and a radio frequency signal, and process the radio frequency signal. The antenna is mainly configured to receive and send radio frequency signals in a form of an electromagnetic wave. The input/output apparatus may include a touchscreen, a display screen, a keyboard, or the like. The input/output apparatus is mainly configured to receive data input by a user and output data to the user. It should be noted that some types of terminal devices may have no input/output apparatus.

When data needs to be sent, the processor outputs the baseband signal to the radio frequency circuit after performing baseband processing on the to-be-sent data. Then, the radio frequency circuit performs radio frequency processing on the baseband signal and then sends the radio frequency signal to the outside in a form of an electromagnetic wave through the antenna. When data is sent to the terminal device, the radio frequency circuit receives the radio frequency signal through the antenna. The radio frequency circuit converts the radio frequency signal into the baseband signal, and outputs the baseband signal to the processor. The processor converts the baseband signal into data, and processes the data. For ease of description, FIG. 19 shows only one memory, one processor, and one transceiver. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In embodiments of this application, the antenna and the radio frequency circuit that have receiving and sending functions may be considered as a transceiver module of the terminal device, and the processor that has a processing function may be considered as a processing module of the terminal device.

As shown in FIG. 19, the terminal device includes the processor 1910, the memory 1920, and the transceiver 1930. The processor 1910 may also be referred to as a processing unit, a processing board, a processing module, a processing apparatus, or the like. The transceiver 1930 may also be referred to as a transceiver unit, a transceiver apparatus, or the like.

Optionally, a component configured to implement a receiving function in the transceiver 1930 is considered as a receiving module, and a component configured to implement a sending function in the transceiver 1930 is considered as a sending module. That is, the transceiver 1930 includes a receiver and a transmitter. The transceiver may also be sometimes referred to as a transceiver module, a transceiver circuit, or the like. The receiver may also be sometimes referred to as a receiving module, a receiving circuit, or the like. The transmitter may also be sometimes referred to as a transmitting module, a transmitting circuit, or the like.

The processor 1901 is configured to perform the processing action on the AI task node side, the first AI training node side, or the second AI training node side in the embodiment shown in FIG. 3A and FIG. 3B above, or the processing action on the first AI training node side or the second AI training node side in the embodiment shown in FIG. 13. The transceiver 1930 is configured to perform receiving and sending actions on the AI task node side, the first AI training node side, or the second AI training node side in the embodiment shown in FIG. 3A and FIG. 3B above, or perform receiving and sending actions on the first AI training node side or the second AI training node side in the embodiment shown in FIG. 13.

It should be understood that FIG. 19 is merely an example rather than a limitation. The terminal device including the transceiver module and the processing module may not depend on the structure shown in FIG. 16, FIG. 17, or FIG. 19.

When the communication apparatus 1900 is the chip, the chip includes a processor, a memory, and a transceiver. The transceiver may be an input/output circuit or a communication interface. The processor may be a processing module, a microprocessor, or an integrated circuit integrated on the chip. The sending operation of the AI task node, the first AI training node, or the second AI training node in the foregoing method embodiment may be understood as output of the chip, and the receiving operation of the AI task node, the first AI training node, or the second AI training node in the foregoing method embodiment may be understood as input of the chip.

This application further provides a communication apparatus 2000. The communication apparatus 2000 may be a network device or a chip. The communication apparatus 2000 may be configured to perform the operations performed by the AI task node, the first AI training node, or the second AI training node in the embodiment shown in FIG. 3A and FIG. 3B above, or configured to perform the operations performed by the first AI training node or the second AI training node in the embodiment shown in FIG. 13 above.

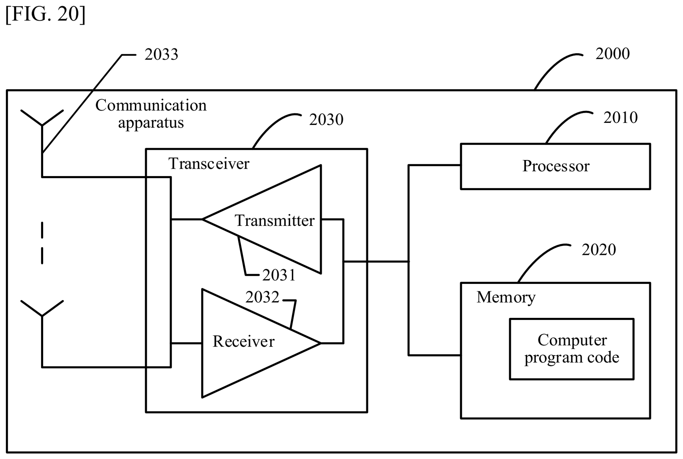

When the communication apparatus 2000 is the network device, for example, a base station, FIG. 20 is a simplified diagram of a structure of a base station. The base station includes a part 2010, a part 2020, and a part 2030. The part 2010 is mainly configured to: perform baseband processing, control the base station, and so on. The part 2010 is usually a control center of the base station, may be usually referred to as a processor, and is configured to control the base station to perform the processing operation on the AI task node side, the first AI training node side, or the second AI training node side in the foregoing method embodiment. The part 2020 is mainly configured to store computer program code and data. The part 2030 is mainly configured to receive and send radio frequency signals, and perform conversion between the radio frequency signal and a baseband signal. The part 2030 may be usually referred to as a transceiver module, a transceiver circuit, a transceiver, or the like. The transceiver module in the part 2030 may also be referred to as a transceiver or the like, and includes an antenna 2033 and a radio frequency circuit (not shown in the figure). The radio frequency circuit is mainly configured to perform radio frequency processing. Optionally, in the part 2030, a component configured to implement a receiving function may be considered as a receiver, and a component configured to implement a sending function may be considered as a transmitter. That is, the part 2030 includes a receiver 2032 and a transmitter 2031. The receiver may also be referred to as a receiving module, a receiving circuit, or the like, and the transmitter may be referred to as a transmitting module, a transmitting circuit, or the like.

The part 2010 and the part 2020 may include one or more boards, and each board may include one or more processors and one or more memories. The processor is configured to read and execute a program in the memory, to implement a baseband processing function and control the base station. If there are a plurality of boards, the boards may be interconnected with each other to enhance a processing capability. In an optional implementation, a plurality of boards may share one or more processors, a plurality of boards share one or more memories, or a plurality of boards share one or more processors simultaneously.

For example, in an implementation, the transceiver module in the part 2030 is configured to perform the receiving and sending-related process performed by the AI task node, the first AI training node, or the second AI training node in the embodiment shown in FIG. 3A and FIG. 3B. The processor in the part 2010 is configured to perform the processing-related process performed by the AI task node, the first AI training node, or the second AI training node in the embodiment shown in FIG. 3A and FIG. 3B. In another implementation, the transceiver module in the part 2030 is configured to perform the receiving and sending-related process performed by the first AI training node or the second AI training node in the embodiment shown in FIG. 13. The processor in the part 2010 is configured to perform the processing-related process performed by the first AI training node or the second AI training node in the embodiment shown in FIG. 13.

It should be understood that FIG. 20 is merely an example rather than a limitation. The network device including the processor, the memory, and the transceiver may not depend on the structure shown in FIG. 16, FIG. 17, or FIG. 20.

When the communication apparatus 2000 is the chip, the chip includes a transceiver, a memory, and a processor. The transceiver may be an input/output circuit or a communication interface. The processor is a processor, a microprocessor, or an integrated circuit integrated on the chip. The sending operation of the AI task node, the first AI training node, or the second AI training node in the foregoing method embodiment may be understood as output of the chip, and the receiving operation of the AI task node, the first AI training node, or the second AI training node in the foregoing method embodiment may be understood as input of the chip.

An embodiment of this application further provides a computer-readable storage medium. The computer-readable storage medium stores computer instructions for implementing the method performed by the AI task node, the first AI training node, or the second AI training node in the foregoing method embodiment.

For example, when the computer program is executed by a computer, the computer is enabled to implement the method performed by the AI task node, the first AI training node, or the second AI training node in the foregoing method embodiment.

An embodiment of this application further provides a computer program product including instructions. When the instructions are executed by a computer, the computer is enabled to implement the method performed by the AI task node, the first AI training node, or the second AI training node in the foregoing method embodiment.

An embodiment of this application further provides a communication system. The communication system includes the AI task node in the foregoing embodiment and the first AI training node in the foregoing embodiment. Optionally, the communication system further includes the second AI training node in the foregoing embodiment. Optionally, the communication system further includes the AI model node in the foregoing embodiment.

An embodiment of this application further provides another communication system. The communication system includes the first AI training node in the foregoing embodiment and the second AI training node in the foregoing embodiment. Optionally, the communication system further includes the AI task node in the foregoing embodiment. Optionally, the communication system further includes the AI model node in the foregoing embodiment.

An embodiment of this application further provides a chip apparatus, including a processor, configured to invoke a computer program or computer instructions stored in a memory, so that the processor performs the methods provided in the embodiments shown in FIG. 3A, FIG. 3B, and FIG. 13 above.

In a possible implementation, input of the chip apparatus corresponds to the receiving operation in any one of the embodiments shown in FIG. 3A, FIG. 3B, and FIG. 13 above, and output of the chip apparatus corresponds to the sending operation in any one of the embodiments shown in FIG. 3A, FIG. 3B, and FIG. 13 above.

Optionally, the processor is coupled to the memory through an interface.

Optionally, the chip apparatus further includes the memory, and the memory stores the computer program or the computer instructions.

The processor mentioned anywhere above may be a general-purpose central processing unit, a microprocessor, an application-specific integrated circuit (application-specific integrated circuit, ASIC), or one or more integrated circuits for controlling program execution of the method provided in any of the embodiments shown in FIG. 3A, FIG. 3B, and FIG. 13. The memory mentioned anywhere above may be a read-only memory (read-only memory, ROM), another type of static storage device that can store static information and instructions, a random access memory (random access memory, RAM), or the like.

It may be clearly understood by persons skilled in the art that, for convenient and brief description, for explanations and beneficial effects of related content in any one of the communication apparatuses provided above, refer to the corresponding method embodiment provided above. Details are not described herein again.

In the several embodiments provided in this application, it should be understood that the disclosed system, apparatus, and method may be implemented in other manners. For example, the foregoing apparatus embodiment is merely an example. For example, division into the units is merely logical function division, and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions in embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions in this application essentially, the part contributing, or all or some of the technical solutions may be implemented in a form of a software product. The computer software product is stored in a storage medium, and includes several instructions for instructing a computer device (which may be a personal computer, a server, or a network device) to perform all or some of the steps of the methods in embodiments of this application. The foregoing storage medium includes any medium that can store program code, such as a USB flash drive, a removable hard disk, a ROM, a RAM, a magnetic disk, or an optical disc.

The foregoing embodiments are merely for describing the technical solutions in this application, but not for limiting this application. Although this application is described in detail with reference to the foregoing embodiments, persons of ordinary skill in the art should understand that they may still make modifications to the technical solutions recorded in the foregoing embodiments or make equivalent replacements to some technical features thereof. However, these modifications or replacements do not cause the essence of the corresponding technical solutions to depart from the scope of the technical solutions in embodiments of this application.

**Claims**

1. A model training configuration method, wherein the method comprises:

sending, by an artificial intelligence AI task node, a first request to a first AI training node, wherein the first request is for requesting the first AI training node to train a first submodel; and
sending, by the AI task node, first configuration information to the first AI training node, wherein the first configuration information is for configuring at least one first additional module; and the at least one first additional module is configured to map a symbol output by the first submodel to a symbol to be output by the first AI training node on an air interface, and/or the at least one first additional module is configured to convert a symbol received by the first AI training node on an air interface into an update parameter for updating the first submodel.

2. A model training configuration method, wherein the method comprises:

receiving, by a first artificial intelligence AI training node, a first request from an AI task node, wherein the first request is for requesting the first AI training node to train a first submodel;

receiving, by the first AI training node, first configuration information from the AI task node, wherein the first configuration information is for configuring at least one first additional module; and

mapping, by the first AI training node by using the at least one first additional module, a symbol output by the first submodel to a symbol to be output by the first AI training node on an air interface, and sending the to-be-output symbol to a second AI training node; and/or converting, by the first AI training node by using the at least one first additional module, a symbol that is received by the first AI training node from the second AI training node on an air interface into an update parameter for updating the first submodel, and updating, by the first AI training node, the first submodel by using the update parameter.

3. The method according to claim 1 or 2, wherein the first configuration information comprises at least one of the following: an index, a type, or a structure parameter of the at least one first additional module, first indication information, second indication information, third indication information, fourth indication information, or fifth indication information, wherein

the first indication information indicates whether the at least one first additional module is to participate in training of the first submodel; the second indication information indicates whether the at least one first additional module is to be reported as a part of the first submodel to the AI task node; the third indication information indicates a deployment manner of each of the at least one first additional module, wherein the deployment manner comprises serial deployment or parallel deployment; the fourth indication information indicates whether to indicate the type or the structure parameter of the at least one first additional module to the first AI training node; and the fifth indication information indicates a location at which each of the at least one first additional module is to be inserted into the first submodel.

4. The method according to claim 3, wherein the first configuration information further comprises an index of a hypernetwork, and the hypernetwork is for generating the at least one first additional module.

5. The method according to claim 3 or 4, wherein the fifth indication information comprises a bitmap, a bit in the bitmap corresponds to a neural network layer in the first submodel, and the bit in the bitmap indicates whether to insert a first additional module for the neural network layer corresponding to the bit.

6. The method according to claim 5, wherein one bit in the bitmap corresponds to one neural network layer in the first submodel; and

when a value of the bit in the bitmap is 1, it indicates to insert a corresponding first additional module between the neural network layer corresponding to the bit and a next neural network layer of the neural network layer corresponding to the bit; or when a value of the bit in the bitmap is 0, it indicates to insert no first additional module between the neural network layer corresponding to the bit and a next neural network layer of the neural network layer corresponding to the bit;

or

when a value of the bit in the bitmap is 0, it indicates to insert no first additional module between the neural network layer corresponding to the bit and a next neural network layer of the neural network layer corresponding to the bit; or when a value of the bit in the bitmap is 1, it indicates to insert a corresponding first additional module between the neural network layer corresponding to the bit and a next neural network layer of the neural network layer corresponding to the bit.

7. The method according to any one of claims 3 to 6, wherein the at least one first additional module comprises a plurality of first additional modules; and

the fifth indication information indicates to insert the plurality of first additional modules between an $X^{th}$ neural network layer and an $(X+1)^{th}$ neural network layer in the first submodel, wherein X is greater than or equal to 1 and less than a quantity of neural network layers comprised in the first submodel; and a sum of input dimensions of the plurality of first additional modules is equal to an output dimension of the $X^{th}$ neural network layer, and a sum of output dimensions of the plurality of first additional modules is equal to an input dimension of the $(X+1)^{th}$ neural network layer; or a sum of input dimensions of the plurality of first additional modules is greater than an output dimension of the $X^{th}$ neural network layer, zero padding is performed on output data of the $X^{th}$ neural network layer to enable the output dimension of the $X^{th}$ neural network layer to be equal to the sum of the input dimensions of the plurality of first additional modules, and dimension reduction is performed on output data of one or more of the plurality of first additional modules to enable a sum of output dimensions of the plurality of first additional modules to be equal to an input dimension of the $(X+1)^{th}$ neural network layer;

or

the fifth indication information indicates to insert the plurality of first additional modules into an outermost neural network layer in the first submodel, wherein a sum of input dimensions of the plurality of first additional modules is equal to an output dimension of the outermost neural network layer; or a sum of input dimensions of the plurality of first additional modules is greater than an output dimension of the outermost neural network layer, and zero padding is performed on output data of the outermost neural network layer to enable the output dimension of the outermost neural network layer to be equal to the sum of the input dimensions of the plurality of first additional modules.

8. The method according to any one of claims 1 to 7, wherein each of the at least one first additional module is a neural network or a signal processing module.

9. The method according to any one of claims 1 to 8, wherein the first request comprises at least one of the following: a structure of the first submodel, a hyperparameter, a loss function, a training stopping condition, a number of the first submodel in a plurality of submodels, or a dataset, wherein the plurality of submodels are obtained by splitting, by the AI task node, a first model that an AI model node requests to train, the training stopping condition is a condition for stopping training the first submodel by the first AI training node, and the dataset is used as input data of the first submodel.

10. The method according to any one of claims 1 and 3 to 9, wherein before sending, by the AI task node, the first configuration information to the first AI training node, the method further comprises:

sending, by the AI task node, a second request to the first AI training node, wherein the second request is for requesting channel state information between the first AI training node and the second AI training node;
receiving, by the AI task node, the channel state information from the first AI training node; and
determining, by the AI task node, the at least one first additional module based on a task type and the channel state information, wherein the task type is a type of a task requested by the AI model node from the AI task node.

11. The method according to any one of claims 2 to 9, wherein before receiving, by the first AI training node, the first configuration information from the first AI task node, the method further comprises:

receiving, by the first AI training node, a second request from the AI task node, wherein the second request is for requesting channel state information between the first AI training node and the second AI training node;
sending, by the first AI training node, a channel measurement signal to the second AI training node;
receiving, by the first AI training node, the channel state information from the second AI training node, wherein the channel state information is obtained by the second AI training node by measuring the channel measurement signal; and
sending, by the first AI training node, the channel state information to the AI task node.

12. The method according to any one of claims 1, 3 to 9, and 10, wherein the method further comprises:

sending, by the AI task node, a third request to the second AI training node, wherein the third request is for requesting the second AI training node to train a second submodel; and
sending, by the AI task node, second configuration information to the second AI training node, wherein the second configuration information is for configuring at least one second additional module; and the at least one second additional module is configured to convert the update parameter for updating the first submodel into the symbol to be output by the second AI training node on the air interface, and/or the at least one second additional module is configured to map the symbol received by the second AI training node on the air interface to a symbol to be input into the second submodel.

13. The method according to any one of claims 2 to 9 and 11, wherein the at least one first additional module comprises a first additional module 1; the fifth indication information indicates to insert the first additional module 1 between the $X^{th}$ neural network layer and the $(X+1)^{th}$ neural network layer in the first submodel, wherein X is greater than or equal to 1 and less than the quantity of neural network layers comprised in the first submodel, and an input dimension of the first additional module 1 is less than the output dimension of the $X^{th}$ neural network layer; and the method further comprises:

determining, by the first AI training node, a first additional module 2, and inserting, by the first AI training node, the first additional module 1 and the first additional module 2 between the $X^{th}$ neural network layer and the $(X+1)^{th}$ neural network layer, wherein a sum of the input dimension of the first additional module 1 and an input dimension of the first additional module 2 is equal to the output dimension of the $X^{th}$ neural network layer, and a sum of an output dimension of the first additional module 1 and an output dimension of the first additional module 2 is equal to the input dimension of the $(X+1)^{th}$ neural network layer; or a sum of the input dimension of the first additional module 1 and an input dimension of the first additional module 2 is greater than the output dimension of the $X^{th}$ neural network layer, zero padding is performed on the output data of the $X^{th}$ neural network layer to enable the output dimension of the $X^{th}$ neural network layer to be equal to the sum of the input dimension of the first additional module 1 and the input dimension of the first additional module 2, and dimension reduction is performed on output data of the first additional module 1 and/or the first additional module 2 to enable a sum of an output dimension of the first additional module 1 and an output dimension of the first additional module 2 to be equal to the input dimension of the $(X+1)^{th}$ neural network layer;
or
the at least one first additional module comprises a first additional module 1; the fifth indication information indicates to insert the first additional module 1 into the outermost neural network layer in the first submodel; and the method further comprises:
determining, by the first AI training node, a first additional module 2, and inserting, by the first AI training node, the first additional module 1 and the first additional module 2 into the outermost neural network layer, wherein a sum of an input dimension of the first additional module 1 and an input dimension of the first additional module 2 is equal to the output dimension of the outermost neural network layer; or a sum of an input dimension of the first additional module 1 and an input dimension of the first additional module 2 is greater than the output dimension of the outermost neural network layer, and zero padding is performed on the output data of the outermost neural network layer to enable the output dimension of the outermost neural network layer to be equal to the sum of the input dimension of the first additional module 1 and the input dimension of the first additional module 2.

14. The method according to any one of claims 2 to 9, 11, and 13, wherein the method further comprises:

performing, by the first AI training node, redundancy processing on the to-be-output symbol by using a first redundancy processing module, and then sending a to-be-output symbol obtained through redundancy processing to the second AI training node; and/or
performing, by the first AI training node by using the first redundancy processing module, redundancy removal processing on the symbol that is received by the first AI training node from the second AI training node on the air interface, and then converting a symbol obtained through redundancy removal processing into the update parameter by using the at least one first additional module.

15. The method according to claim 14, wherein a dimension of the first redundancy processing module is equal to a product of a redundancy multiple and a dimension of the at least one first additional module.

16. The method according to claim 15, wherein the method further comprises:

sending, by the first AI training node, the channel measurement signal to the second AI training node; and
receiving, by the first AI training node, the redundancy multiple from the second AI training node, wherein the redundancy multiple is determined by the second AI training node by measuring the channel measurement signal.

17. The method according to claim 15, wherein the method further comprises:

sending, by the first AI training node, the channel measurement signal to the second AI training node; receiving, by the first AI training node, the channel state information from the second AI training node, wherein the channel state information is obtained by the second AI training node by measuring the channel measurement signal; and determining, by the first AI training node, the redundancy multiple based on the channel state information.

18. The method according to any one of claims 14 to 17, wherein the first redundancy processing module is a neural network or a signal processing module.

19. A model training configuration method, wherein the method comprises:

receiving, by a second artificial intelligence AI training node, a third request from an AI task node, wherein the third request is for requesting the second AI training node to train a second submodel;
receiving, by the second AI training node, second configuration information from the AI task node, wherein the second configuration information is for configuring at least one second additional module; and
converting, by the second AI training node by using the at least one second additional module, an update parameter for updating a first submodel of the first AI training node into a symbol to be output by the second AI training node on an air interface, and sending the to-be-output symbol to the first AI training node; and/or mapping, by the second AI training node by using the at least one second additional module, a symbol that is received by the second AI training node from the first AI training node on an air interface to a symbol to be input into the second submodel of the second AI training node.

20. The method according to claim 19, wherein the method further comprises:

performing, by the second AI training node, redundancy processing on the to-be-output symbol by using a second redundancy processing module, and then sending the to-be-output symbol to the first AI training node; and/or performing, by the second AI training node by using the second redundancy processing module, redundancy removal processing on the symbol that is received by the second AI training node from the first AI training node on the air interface, and then converting, by using the at least one second additional module, a symbol obtained through redundancy removal processing into the symbol to be input into the second submodel of the second AI training node.

21. The method according to claim 20, wherein a dimension of the second redundancy processing module is equal to a product of a redundancy multiple and a dimension of the at least one second additional module.

22. The method according to claim 21, wherein the method further comprises:

receiving, by the second AI training node, a channel measurement signal from the first AI training node; and sending, by the second AI training node, the redundancy multiple to the first AI training node, wherein the redundancy multiple is determined by the second AI training node by measuring the channel measurement signal.

23. The method according to claim 21, wherein the method further comprises:

receiving, by the second AI training node, a channel measurement signal from the first AI training node; and sending, by the second AI training node, channel state information to the first AI training node, wherein the channel state information is obtained by the second AI training node by measuring the channel measurement signal, and the channel state information is for determining the redundancy multiple.

24. The method according to any one of claims 20 to 23, wherein the second redundancy processing module is a neural network or a signal processing module.

25. A communication apparatus, wherein the communication apparatus comprises a transceiver module, and the transceiver module is configured to perform receiving and sending operations in the method according to any one of claims 1, 3 to 10, and 12.

26. A communication apparatus, wherein the communication apparatus comprises a transceiver module and a processing module, wherein

the transceiver module is configured to perform receiving and sending operations in the method according to any one of claims 2 to 9, 11, and 13, and the processing module is configured to perform a processing operation in the method according to any one of claims 2 to 9, 11, and 13; or
the transceiver module is configured to perform receiving and sending operations in the method according to any one of claims 19 to 24, and the processing module is configured to perform a processing operation in the method according to any one of claims 19 to 24.

27. A communication apparatus, wherein the communication apparatus comprises a processor, and the processor is configured to execute a computer program or computer instructions in a memory, to perform the method according to any one of claims 1 to 24.

28. A computer-readable storage medium, wherein the computer-readable storage medium stores a computer program; and when the computer program is executed by a communication apparatus, the communication apparatus is enabled to perform the method according to any one of claims 1 to 24.

29. A communication system, wherein the communication system comprises an AI task node and a first AI training node, the AI task node is configured to perform the method according to any one of claims 1, 3 to 10, and 12, and the first AI training node is configured to perform the method according to any one of claims 2 to 9, 11, and 13.

30. The communication system according to claim 29, wherein the communication system further comprises a second AI training node, and the second AI training node is configured to perform the method according to any one of 19 to 24.

[FIG. 1A]

[FIG. 1B]

[FIG. 1C]

[FIG. 1D]

[FIG. 2A]

[FIG. 2B]

[FIG. 2C]

```
                    ┌─────────────────────┐
                    │  Core network device│
                    │  ┌ ─ ─ ─ ─ ─ ─ ─ ┐  │
                    │    AI module        │
                    │  └ ─ ─ ─ ─ ─ ─ ─ ┘  │
                    └─────────────────────┘
               NG                        NG
  ┌─────────────────────┐      ┌─────────────────────┐
  │ Central unit CU 1    │  Xn  │ Central unit CU 2   │
  │ ┌ ─ ─ ─ ─ ─ ─ ┐      │──────│ ┌ ─ ─ ─ ─ ─ ─ ┐     │
  │   AI module          │      │   AI module         │
  │ └ ─ ─ ─ ─ ─ ─ ┘      │      │ └ ─ ─ ─ ─ ─ ─ ┘     │
  └─────────────────────┘      └─────────────────────┘
          F1                            F1
  ┌─────────────────────┐      ┌─────────────────────┐
  │ Distributed unit DU 1│      │ Distributed unit DU 2│
  │ ┌ ─ ─ ─ ─ ─ ─ ┐      │      │ ┌ ─ ─ ─ ─ ─ ─ ┐     │
  │   AI module          │      │   AI module         │
  │ └ ─ ─ ─ ─ ─ ─ ┘      │      │ └ ─ ─ ─ ─ ─ ─ ┘     │
  └─────────────────────┘      └─────────────────────┘
       Air                        Air
       interface                  interface
              ┌─────────────────────┐
              │   Terminal device   │
              │  ┌ ─ ─ ─ ─ ─ ─ ┐   │
              │    AI module       │
              │  └ ─ ─ ─ ─ ─ ─ ┘   │
              └─────────────────────┘
```

Core network device — AI module

NG — NG

Central unit CU 1 — AI module; Xn; Central unit CU 2 — AI module

F1; F1

Distributed unit DU 1 — AI module; Distributed unit DU 2 — AI module

Air interface; Air interface

Terminal device — AI module

OAM — AI module

[FIG. 2D]

Neural network NN 1   NN 2   NN 3   NN 4   NN 5   NN 6

[FIG. 2E]

Neural
network #1

Neural
network #2

Neural
network #3

$A_0$       $Z_1$    $\sigma$    $A_1$     $Z_2$    $\sigma$    $A_2$     $Z_3$    $\sigma$   $A_3$

$\theta_1$           $\theta_2$          $\theta_3$

[FIG. 3A]

| AI model node | AI task node | First AI training node | Second AI training node |
|---|---|---|---|

301a: Fourth request
(for requesting to train a first model)

301: First request
(for requesting the first AI training node to train a first submodel)

301b: Third request
(for requesting the second AI training node to train a second submodel)

301c: Second request
(for requesting channel state information between the first AI training node and the second AI training node)

301d: Channel measurement signal

301e: Channel state information

301f: Channel state information

302: First configuration information
(for configuring at least one first additional module)

TO FIG. 3B             TO FIG. 3B

[FIG. 3B]

CONT. FROM
FIG. 3A

CONT. FROM
FIG. 3A

302a: Second
configuration information
(for configuring at least
one second additional
module)

303: Map, by using the at least one first additional module, a symbol output by the first submodel to a symbol to be output by the first AI training node on an air interface, and send the to-be-output symbol to the second AI training node; and/or convert, by using the at least one first additional module, a symbol that is received by the first AI training node from the second AI training node on an air interface into an update parameter for updating the first submodel, and update the first submodel by using the update parameter

303a: Convert, by using the at least one second additional module, the update parameter for updating the first submodel of the first AI training node into the symbol to be output by the second AI training node on the air interface, and send the to-be-output symbol to the first AI training node; and/or map, by using the at least one second additional module, the symbol that is received by the second AI training node from the first AI training node on the air interface to a symbol to be input into the second submodel of the second AI training node

304: Structure parameter
of a first submodel
obtained through training

305: Structure parameter
of a second submodel
obtained through training

306: Structure
parameter of a first
model obtained
through training

[FIG. 4]

First model

First submodel

Second submodel

First AI training node

Second AI training node

Channel

First additional module

Second additional module

[FIG. 5A]

| Neural network NN 1 | First additional module 1 | Neural network NN 2 | First additional module 2 |

First AI training node

| Neural network NN 3 | Second additional module 1 | Neural network NN 4 | Second additional module 2 |

Second AI training node

EP 4 694 064 A1

[FIG. 5B]

First AI training node

Second AI training node

[FIG. 5C]

```
┌ ─ ─ ─ ─ ─ ─ ─ ─ ─ ─ ─ ─ ─ ─ ─ ┐          ┌ ─ ─ ─ ─ ─ ─ ─ ─ ─ ─ ─ ─ ─ ─ ─ ┐
│  ┌──────────┐   ┌──────────┐  │          │  ┌──────────┐   ┌──────────┐  │
│  │  Neural  │   │  Neural  │  │          │  │  Neural  │   │  Neural  │  │
│  │ network  │   │ network  │  │          │  │ network  │   │ network  │  │
│  │   NN 1   │   │   NN 2   │  │          │  │   NN 3   │   │   NN 4   │  │
│  └──────────┘   └──────────┘  │          │  └──────────┘   └──────────┘  │
│                               │          │                               │
│  ┌──────────┐   ┌──────────┐  │          │  ┌──────────┐   ┌──────────┐  │
│  │  First   │   │  First   │  │          │  │  Second  │   │  Second  │  │
│  │additional│   │additional│  │          │  │additional│   │additional│  │
│  │ module 1 │   │ module 2 │  │          │  │ module 1 │   │ module 2 │  │
│  └──────────┘   └──────────┘  │          │  └──────────┘   └──────────┘  │
└ ─ ─ ─ ─ ─ ─ ─ ─ ─ ─ ─ ─ ─ ─ ─ ┘          └ ─ ─ ─ ─ ─ ─ ─ ─ ─ ─ ─ ─ ─ ─ ─ ┘
      First AI training node                      Second AI training node
```

[FIG. 6]

```
┌──────────┐                ┌ ─ ─ ─ ─ ─ ─ ─ ─ ─ ─ ─ ─ ─ ┐
│          │                │ ┌──────────┐  ┌──────────┐ │
│ AI task  │  Hypernetwork  │ │          │  │  First   │ │
│  node    │ ─────────────► │i│ Hypernet │► │additional│ │
│          │                │ │  work    │  │ module i │ │
│          │                │ └──────────┘  └──────────┘ │
└──────────┘                └ ─ ─ ─ ─ ─ ─ ─ ─ ─ ─ ─ ─ ─ ┘
                                   First AI training node
```

[FIG. 7]

```
┌──────────┐  Type, structure parameter,    ┌ ─ ─ ─ ─ ─ ─ ─ ─ ─ ─ ─ ┐
│          │  and/or index of at least one   │ ┌────────┐ ┌────────┐ │
│ AI task  │  first additional module        │ │ First  │ │ First  │ │
│  node    │ ──────────────────────────────► │ │additio-│ │additio-│ ... │
│          │                                 │ │nal     │ │nal     │ │
│          │                                 │ │module 1│ │module 2│ │
└──────────┘                                 │ └────────┘ └────────┘ │
                                             └ ─ ─ ─ ─ ─ ─ ─ ─ ─ ─ ─ ┘
                                                  First AI training node
```

[FIG. 8]

[FIG. 9]

16 bits (bits)    Eight bits (bits)    Four bits (bits)

☐ Signal-to-noise ratio: 10 dB

▨ Signal-to-noise ratio: 0 dB

▨ Signal-to-noise ratio: −10 dB

[FIG. 10]

☐ Signal-to-noise ratio: 10 dB

▨ Signal-to-noise ratio: 0 dB

▨ Signal-to-noise ratio: −10 dB

[FIG. 11]

First redundancy
processing module

$\beta=2$

Second redundancy
processing module

First additional
module

Second additional
module

First AI training node

Second AI training node

[FIG. 12]

Regression task

[FIG. 13]

[FIG. 14]

[FIG. 15]

First submodel

Second submodel

[FIG. 16]

Communication apparatus 1600

1601

1602

Transceiver module

Processing module

[FIG. 17]

Communication apparatus 1700

1701

1702

Transceiver module

Processing module

[FIG. 18]

Communication
apparatus 1800

Processor
1810

Transceiver
1830

Memory
1820

[FIG. 19]

1900

Communication
apparatus

1910

Processor

1930

Transceiver

1933

Transmitter

1920

Memory

Computer
program code

1931

1932

Receiver

[FIG. 20]

## INTERNATIONAL SEARCH REPORT

| | International application No. |
|---|---|
| | **PCT/CN2023/096598** |

**A. CLASSIFICATION OF SUBJECT MATTER**

H04L41/16(2022.01)i;  G06N20/20(2019.01)i

According to International Patent Classification (IPC) or to both national classification and IPC

**B. FIELDS SEARCHED**

Minimum documentation searched (classification system followed by classification symbols)

IPC:  H04L41/-; G06N20/-

Documentation searched other than minimum documentation to the extent that such documents are included in the fields searched

Electronic data base consulted during the international search (name of data base and, where practicable, search terms used)

CNTXT, ENTXTC, VEN, CNKI, IEEE: 训练, 模型, 任务, 结点, 节点, 空口, 空中接口, 映射, 转换, 转化, 配置, 更新, 参数, TRAINING, MODEL+, TASK+, NODE+, AIR INTERFACE, MAPPING, CONVER+, TRANSFORM+, CONFIGUR+, UPDAT+, PARAMETER+

**C. DOCUMENTS CONSIDERED TO BE RELEVANT**

| Category* | Citation of document, with indication, where appropriate, of the relevant passages | Relevant to claim No. |
|---|---|---|
| A | CN 114819195 A (HUAWEI TECHNOLOGIES CO., LTD.) 29 July 2022 (2022-07-29) description, paragraphs 26-73 | 1-30 |
| A | CN 115802370 A (HUAWEI TECHNOLOGIES CO., LTD.) 14 March 2023 (2023-03-14) entire document | 1-30 |
| A | CN 115842835 A (HUAWEI TECHNOLOGIES CO., LTD.) 24 March 2023 (2023-03-24) entire document | 1-30 |
| A | CN 115996160 A (SAMSUNG ELECTRONICS CO., LTD.) 21 April 2023 (2023-04-21) entire document | 1-30 |
| A | WO 2023064812 A1 (APPLE INC.) 20 April 2023 (2023-04-20) entire document | 1-30 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **24 July 2023** | **11 August 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/096598**

| Patent document cited in search report | | | Publication date (day/month/year) | Patent family member(s) | | | Publication date (day/month/year) |
|---|---|---|---|---|---|---|---|
| CN | 114819195 | A | 29 July 2022 | WO | 2022161081 | A1 | 04 August 2022 |
| CN | 115802370 | A | 14 March 2023 | WO | 2023036268 | A1 | 16 March 2023 |
| CN | 115842835 | A | 24 March 2023 | WO | 2023036323 | A1 | 16 March 2023 |
| CN | 115996160 | A | 21 April 2023 | DE | 102022126344 | A1 | 20 April 2023 |
| | | | | KR | 20230055987 | A | 26 April 2023 |
| | | | | US | 2023131694 | A1 | 27 April 2023 |
| WO | 2023064812 | A1 | 20 April 2023 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 202110412895 X